# EUROPÄISCHE PATENTSCHRIFT

(11) **EP 2 215 529 B1**
(45) Veröffentlichungstag und Bekanntmachung des Hinweises auf die Patenterteilung: **11.05.2022**
(21) Anmeldenummer: 08845306.3
(22) Anmeldetag: 31.10.2008
(51) Int. Cl.: G03H 1/20, B42D 25/328

(54) **VERFAHREN UND VORRICHTUNG ZUR HERSTELLUNG VON HOLOGRAMMEN MIT INDIVIDUELL BELICHTETER WASSERZEICHENARTIGER STRUKTUR**
METHOD AND DEVICE FOR PRODUCING HOLOGRAMS HAVING AN INDIVIDUALLY EXPOSED WATERMARK-TYPE STRUCTURE
PROCÉDÉ ET DISPOSITIF DE PRODUCTION D'HOLOGRAMMES PRÉSENTANT UNE STRUCTURE DE TYPE FILIGRANE EXPOSÉE INDIVIDUELLEMENT

(30) Priorität: 31.10.2007 DE 102007052952; 28.12.2007 DE 102007063504
(43) Veröffentlichungstag der Anmeldung: 11.08.2010
(73) Patentinhaber: Bundesdruckerei GmbH, 10969 Berlin (DE)
(72) Erfinder: LEOPOLD, André, 10119 Berlin (DE); EHREKE, Jens, 12587 Berlin (DE)
(74) Vertreter: Patentanwälte Bressel und Partner mbB
(86) Internationale Anmeldenummer: PCT/EP2008/009348
(87) Internationale Veröffentlichungsnummer: WO 2009/056358

(56) Entgegenhaltungen:
- JP-A- 8 123 307
- US-A1- 2006 289 114
- SCHILLING A ET AL: "Achromatic features for optically variable devices" PROCEEDINGS OF THE SPIE - THE INTERNATIONAL SOCIETY FOR OPTICAL ENGINEERING SPIE-INT. SOC. OPT. ENG USA, Bd. 4677, 2002, Seiten 238-246, XP002515545 ISSN: 0277-786X

## Beschreibung

Die Erfindung betrifft ein Verfahren und eine Vorrichtung zum Herstellen von Hologrammen als Sicherheitselemente, insbesondere für Sicherheitsdokumente, sowie solche Hologramme.

Als Sicherheitsdokumente werden alle Dokumente betrachtet, die gegen ein unbefugtes Kopieren und oder Fälschen geschützt werden sollen. Sicherheitsdokumente umfassen somit alle Arten von Identifikationsdokumenten, wie beispielsweise Reisepässe, Personalausweise, Identitätskarten, Führerscheine usw., Wertdokumente, aber beispielsweise auch Verpackungen beispielsweise von Medikamenten usw.

Sicherheitselemente dienen dazu, eine Echtheitsprüfung von Sicherheitsdokumenten zu ermöglichen. Eine Art von Sicherheitselementen stellen Hologramme dar. In Sicherheitselementen sind oftmals auch individualisierende Angaben enthalten. Bei Sicherheitselementen für oder von Identitätsdokumenten umfassen diese Angabe beispielsweise eine Seriennummer, eine Ausweisnummer, biometrische Daten, Bilder (Passbilder), etc. Diese können in Klarschrift bzw. Bildform oder optisch codiert bzw. maschinenlesbar vorgesehen sein.

Das grundsätzliche Vorgehen bei der Herstellung von individuellen Volumenhologrammen ist beispielsweise in der Literaturstelle EP 0 896 260 A2 beschrieben. Die Grundzüge werden folgend kurz erläutert. Zunächst wird ein Hologrammmaster mit einem Masterhologramm hergestellt. Dann wird der Hologrammmaster hinter ein holografisches Aufzeichnungsmaterial positioniert. Kohärentes Licht, beispielsweise aus einem Laser, wird auf die dem Hologrammmaster abgewandte Seite des holografischen Aufzeichnungsmaterials eingestrahlt, typischerweise mit definierter Wellenlänge und definiertem Inzidenzwinkel, nach Maßgabe des vom Hologrammmaster zu rekonstruierenden holografischen Musters. Es durchdringt das holografische Aufzeichnungsmaterial und wird vom Hologrammmaster gebeugt bzw. reflektiert, womit das Hologramm durch Interferenz mit dem einfallenden Licht erzeugt wird und sich das Hologramm in dem holografischen Aufzeichnungsmaterial abbildet und durch photochemische- oder photophysikalische Prozesse im holografischen Aufzeichnungsmaterial speichert. Dabei kann der Hologrammmaster so ausgelegt sein, dass er für mehrere Wellenlängen empfindlich ist und diese entsprechend beugt. Auch andere als die beschriebene Anordnung können verwendet werden, um Hologramme herzustellen.

Die JP 8-123307 beschreib eine Vorrichtung und ein Verfahren zum flächenselektiven Duplizieren eines Masterhologramms. Es wird vorgeschlagen, beim Duplizieren einen Laserstrahl, der das Masterhologramm zweidimensional abscannt, über einen Akustooptischen-Modulator (AOM) an- und auszuschalten, um ausgewählte Flächenteile des Masterhologramms zu kopieren.

Die US 2006/0289114 A1 beschreibt ein Verfahren und eine Vorrichtung zum Herstellen von Sicherheitsdokumenten. Hierbei ist vorgesehen, ein Masterhologramm zu kopieren und auf dem hierbei verwendeten Film zusätzlich Individualisierungsmerkmale zu speichern.

Alternativ zu einem als Hologramm ausgebildeten Hologrammmaster kann eine sägezahnartige, oder schuppenartige reflektierende Struktur verwendet werden, bei der die Sägezahnflächen oder Schuppenflächen reflektierend sind. Solche Strukturen sind beispielhaft in DE 20 2007 006 796 U1 beschrieben. Die sägezahnartige Struktur ist groß im Verhältnis zur Wellenlänge des Lichts. Ein solcher Hologrammmaster ist für eine Belichtung mit unterschiedlichen Wellenlängen besonders geeignet.

Um Hologramme zu individualisieren, kann das kohärente Licht durch einen Spatial Light Modulator moduliert werden. Hierdurch wird dem Hologramm ein Individualisierungsmuster aufgeprägt. Aus der Praxis sind digitale Projektoren bekannt, welche mit Spatial Light Modulatoren in Form von Liquid Crystal Displays (LCD) arbeiten. Die Funktionsweise entspricht beispielsweise der Projektion eines Dias, wobei der Spatial Light Modulator anstelle des Dias tritt. Alternativ können individuell bedruckte oder fotografisch belichtete Folien zur Modulation des kohärenten Lichts verwendet werden, die vorzugsweise auf das holografische Aufzeichnungsmaterial aufgelegt werden.

Aus der Praxis sind des Weiteren digitale Projektoren bekannt, welche ein DMD (Digital Micro Mirror Device) als Spatial Light Modulator umfassen. Aus der Literaturstelle DE 2005 054 396 A1 ist der Einsatz eines Spatial Light Modulators in Form eines Digital Micro Mirror Device (DMD) zur Markierung von Gegenständen bekannt.

Aus dem Artikel von Schilling et. al. mit dem Titel '"Archromatic Features for Optically Variable Devices", erscheinen in SPIE 4677, S 238-246 (2002), sind achromatische Merkmale von sogenannten optisch variablen Vorrichtungen (OVD) bekannt. Beschrieben sind Oberflächenstrukturen, insbesondere Mattstrukturen, und deren Streueigenschaften. Bei einigen ist die Streuung isotrop bezüglich eines Azimutalwinkels bei anderen Oberflächenstrukturen nicht. Bei einer Gegenüberstellung von Mattstrukturen mit unterschiedlichen Streueigenschaften lassen sich optische Effekte erzielen, die vom Betrachtungswinkel abhängig sind.

Aus der JPH08123307 (A) ist ein Verfahren bekannt, ein Hologramm zu duplizieren. Während der Vervielfältigung können dem Hologramm verschiedene Informationen mittels eines Akusto-Optischen Modulators eingeschrieben werden.

Aus der US 2006/0289114 A1 ist ein Verfahren bekannt, Hologramme auf einem Endlosfilm herzustellen. Mittels einer Flüssigkristallzelle kann ein Laser so beeinflusst werden, dass Personalisierungsinformationen in die Hologramme eingeschrieben werden können.

Als ein Sicherheitselement für Dokumente, die auf Papierbasis hergestellt sind, sind in das Papier bei dessen Herstellung eingearbeitete Wasserzeichen bekannt. Wasserzeichen werden durch Strukturen hergestellt, welche sich in einem Sieb befinden, mit welchem der Papierbrei aus dem Wasser geschöpft wird. An Stellen, an denen das Sieb erhaben ist, sammeln sich weniger Fasern als an jenen Stellen, an welchen das Sieb Vertiefungen aufweist. Dort sammeln sich mehr Fasern. An den Stellen, an denen sich weniger Fasern befinden, ist das Papier durchsichtiger als an jenen Stellen, an denen sich mehr Fasern gesammelt haben. Im Durchlicht ist das Wasserzeichen ohne technische Hilfsmittel auch für einen Laien gut zu erkennen. Moderne Papiermühlen sind in der Lage, Muster, Schriftzeichen und andere grafische Darstellungen in unterschiedlichen Grautönen darzustellen.

Moderne Sicherheitsdokumente, wie Reisepässe, Verpackungen oder Echtheitszertifikate von Software, umfassen heute bereits Hologramme als Sicherheitselemente. Reisepässe und Personalausweise können darüber hinaus ein Hologramm umfassen, welches mit einem das Passbild darstellenden Individualisierungsmuster individualisiert ist. Bei einer fortschreitenden Verbreitung der technischen Geräte, die zur Herstellung von Hologrammen, insbesondere von individualisierten Hologrammen, benötigten werden, ist zu befürchten, dass Dokumentenfälscher einfache Hologramme nachahmen oder herstellen können. Benötigt werden somit Hologramme, deren Erzeugungsaufwand für Fälscher erhöht ist, wobei der erhöhte Aufwand zu mindestens einem zusätzlichen einfach zu verifizierenden Merkmal des Hologramms führen sollte.

Der Erfindung liegt somit die technische Aufgabe zugrunde, ein Herstellungsverfahren sowie eine Vorrichtung zum Herstellen von Hologrammen zu schaffen, bei denen das Hologramm gegenüber den bekannten Hologrammen schwieriger durch Fälscher herzustellen ist und dennoch eine zuverlässige Verifikation und auch eine Großserienfertigung von individualisierten Hologrammen möglich ist.

### Definitionen

Ein Sicherheitselement ist eine bauliche Einheit, die zumindest ein Sicherheitsmerkmal umfasst. Ein Sicherheitselement kann eine selbstständige bauliche Einheit sein, die mit einem Sicherheitsdokument, welches auch ein Wertdokument sein kann, verbunden, beispielsweise verklebt, werden kann. Es kann sich aber auch um einen integralen Bestandteil eines Sicherheitsdokumentes handeln. Ein Beispiel für Erstes ist ein auf ein Sicherheitsdokument aufklebbares Visum. Ein Beispiel für Letzteres ist ein in einen Geldschein oder einen Ausweis integriertes, beispielsweise einlaminiertes Hologramm.

Ein Sicherheitsmerkmal ist eine Struktur, die nur mit (gegenüber einfachem Kopieren) erhöhtem Aufwand oder gar nicht unautorisiert herstellbar bzw. reproduzierbar ist.

Ein Muster besteht typischerweise aus einer Vielzahl nebeneinander angeordneter Mustereinheiten. Dieses können unterschiedliche geformte Regionen oder gleichförmig ausgebildete Pixel sein. Die Mustereinheiten, d.h. die Regionen bzw. Pixel, eines Musters sind einander zugeordnet und in definierter Weise lateral zueinander angeordnet, typischerweise in einer oder zwei Raumdimensionen, und ergeben in der Gesamtbetrachtung eine Darstellung, beispielsweise ein Bild, ein Symbol, ein Logo, einen Schriftzug (Buchstaben, Zahlen, alphanumerisch) oder einen Code (z.B. einen Barcode). Ein Individualisierungsmuster ist ein Muster, welches zur Individualisierung verwendet wird.

Als Region eines Musters wird jede zusammenhängende Fläche angesehen, die eine einheitliche Erscheinung aufweist. Eine Region ist somit durch mindestens eine andere Region und/oder eine Begrenzung des Musters eingegrenzt. Insbesondere bilden Pixel gleicher Erscheinung, die zueinander benachbart sind, eine Region. Hierbei gelten Pixel eines gleichförmigen, matrixartigen, Spalten und Zeilen aufweisenden Rasters als benachbart, wenn sie in derselben Spalte oder derselben Zeile zueinander benachbart sind oder diagonal aneinander angrenzen.

Als Kontur werden wahrnehmbare Begrenzungslinien einer Region. bzw. einer flächig zusammenhängenden Gruppe von Pixeln gleicher optischer Erscheinung oder gleicher Eigenschaften angesehen. Bei in einem matrixartigen Raster werden Pixel als flächig zusammenhängend angesehen, wenn sie sich an mindestens einem Punkt berühren. Dieses bedeutet, dass in einer Spalte oder einer Zeile zueinander benachbarte Pixel gleicher Erscheinung als flächig zusammenhängend angesehen werden wie auch Pixel, die "diagonal" aneinander angrenzen. Hierbei wird davon ausgegangen, dass die Pixel jeweils die einzelnen Rasterflächen nahezu vollständig ausfüllen. Eine Erscheinung von zwei Pixeln oder zwei Teilen einer Fläche gilt als gleich, wenn bei einer Wahrnehmung oder Detektion außer ihren abweichenden Positionen keine Unterschiede bezüglich vorgegebener Vergleichskriterien oder und/oder Vergleichstoleranzen wahrgenommen werden. Da die Wahrnehmung oder Detektion eines Hologramms von einer Rekonstruktionsgeometrie und/oder einer Rekonstruktionswellenlänge abhängig sein, können dieselben benachbarten Pixel unter einer ersten Rekonstruktionsgegebenheit die gleiche und unter einer anderen Rekonstruktionsgegebenheit eine unterschiedliche Wahrnehmung oder Detektion hervorrufen. In dem einen Fall werden sie als Bestandteil einer Region wahrgenommen im anderen Falle nicht.

Als unregelmäßig wird ein Muster eines Hologramms angesehen, wenn die Kontur mindestens einer der Regionen, die das Muster definieren, in einem jeden beliebigen Bereich, dessen Ausdehnung in der Größenordnung der wahrnehmbaren Auflösung bei einer Verifikation des Hologramms hinsichtlich seiner Echtheit und/oder Unverfälschtheit liegt (dessen Ausdehnung beispielsweise quadratisch ist und eine Kantenlänge aufweist, die dem fünffachen der wahrnehmbaren Auflösung entspricht), nicht anhand von Symmetrie-Eigenschaften des Musters oder anderen Gesetzmäßigkeiten, die sich aus einer Kenntnis des Musters ohne den Bereich ergeben, lokal in dem Bereich voraussagbar ist.

Als Sicherheitsdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Wertdokumente, wie Banknoten, Schecks, Postwertzeichen, Kreditkarten, beliebige Chipkarten und Haftetiketten (z.B. zur Produktsicherung). Solche Sicherheitsdokumente weisen typischerweise ein Substrat, eine Druckschicht und optional eine transparente Deckschicht auf. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder Kunststoffbasis in Frage. Ein Substrat wird auch genutzt, um hierauf ein Hologramm als Sicherheitselement auf- oder anzubringen.

Ein Modulator ist eine Vorrichtung, die Licht hinsichtlich seiner Intensität oder Phaseneigenschaften moduliert. Ein belichteter und entwickelter Film, beispielsweise ein Diapositiv ist geeignet, ein durchtretendes Licht zu modulieren.

Ein Spatial Light Modulator (SLM) ist ein Modulator. Ein SLM erlaubt eine zweidimensional ortsaufgelöste Beleuchtung bzw. Bestrahlung eines meist flächigen Gegenstandes mit modulierter Intensität. Hierbei kann es sich beispielsweise um einen DMD (Digital Micro Mirror Device) Chip, ein LCD (Liquid Crystal Display) Transmissionsdisplay oder ein LCoS (Liquid Crystal on Silicon) Display handeln. Allen ist gemeinsam, dass eine Vielzahl von SLM-Pixeln gebildet ist, wobei jedes SLM-Pixel unabhängig von anderen SLM-Pixeln aktivierbar oder deaktivierbar ist (auch Zwischenstufen sind möglich), wodurch durch entsprechende Ansteuerung der SLM-Pixel sich Muster oder Bilder projizieren lassen. Durch die freie Ansteuerbarkeit können auch ohne weiteres verschiedene Bilder oder Muster in zeitlicher Folge hintereinander generiert werden, beispielsweise in Form eines Passfotos.

Ein Code bzw. Muster ist individualisierend, wenn er einzigartig für eine Person oder einen Gegenstand oder eine Gruppe von Personen oder Gegenständen aus einer größeren Gesamtmenge an Personen oder Gegenständen ist. Ein für eine Gruppe von Personen innerhalb der Gesamtmenge der Einwohner eines Landes individualisierender Code ist beispielsweise die Stadt des Wohnortes. Ein für eine Person individualisierender Code ist beispielsweise die Nummer des Personalausweises oder das Passbild. Ein für eine Gruppe von Geldscheinen innerhalb der Gesamtmenge der Geldscheine individualisierender Code ist die Wertigkeit. Für einen Geldschein individualisierend ist die Seriennummer. Beispiele für nicht individualisierende Codes bzw. Muster sind Wappen, Siegel, Hoheitszeichen, etc.

Ein holografisches Aufzeichnungsmaterial ist eine Schicht aus einem Material, welches photosensitiv ist, und in welcher sich Holografien durch irreversible, aber auch reversible photochemische und/oder photophysikalische Prozesse im Wege der Belichtung speichern lassen. Lediglich beispielhaft seien die in der Holografie oft verwendeten Photopolymere genannt.

Unter dem Begriff Rekonstruktionsgeometrie wird allgemein eine Geometrie verstanden, die zum Rekonstruieren eines Hologramms verwendet wird. Diese ist durch einen Einfallwinkel des zur Beleuchtung genutzten Lichts und einen Ausfallwinkel, unter dem das Hologramm mit optimaler Helligkeit betrachtet werden kann, gekennzeichnet. Beide Winkel können unabhängig von einander variiert werden, um eine Rekonstruktionsgeometrie zu verändern. Eine optimale Rekonstruktionsgeometrie ist jene Geometrie, bei der das Hologramm optimal rekonstruiert wird.

Ein Belichtungseinfallwinkel ist der Winkel, unter dem ein Masterhologramm bei einem Kontaktkopiervorgang belichtet wird, um dieses zu rekonstruieren. Der Winkel, unter dem die Rekonstruktion entsteht, wird als Belichtungsausfallwinkel bezeichnet. Der Wortbestandteil "Belichtungs-" soll andeuten, dass die Rekonstruktion während der Belichtung eines bei dem Kontaktkopiervorgang erzeugten Hologramms erfolgt. Die Begriffe Belichtungseinfallwinkel und Belichtungsausfallwinkel werden auch für Hologrammmaster verwendet, die kein Masterhologramm umfassen, sondern beispielsweise sägezahnartige Reflexionsflächen umfassen, die gegenüber einer Masteroberfläche geneigt sind. Unter dem Belichtungseinfallwinkel bezüglich der Masteroberfläche auftreffendes Licht wird von den Reflexionsflächen, deren Ausdehnungen größer als eine Wellenlänge des auftreffenden Lichts sind, unter einem definierten Beleuchtungsausfallwinkel reflektiert.

Ist in dem Hologrammmaster ein unterschiedliche Regionen umfassendes Hintergrundmuster gespeichert, so kann das Licht, das unter dem Belichtungseinfallwinkel auf den Hologrammmaster auftrefft, unter unterschiedlichen Belichtungsausfallwinkeln gebeugt bzw. reflektiert werden.

Bei einem fertig gestellten Hologramm als Sicherheitselement wird der Winkel, unter dem das Hologramm für eine Rekonstruktion optimal beleuchtet wird, als Rekonstruktionseinfallwinkel bezeichnet, der Winkel unter dem das Hologramm optimal betrachtet werden kann, wird entsprechend als Rekonstruktionsausfallwinkel bezeichnet. Eine Rekonstruktionsgeometrie, bei der die Beleuchtung unter dem Rekonstruktionseinfallwinkel erfolgt und die Betrachtung unter dem Rekonstruktionsausfallwinkel vorgenommen wird, ist somit die optimale Rekonstruktionsgeometrie. Einfallwinkel und Ausfallwinkel, die bei einer Rekonstruktion verwendet werden, jedoch nicht die optimale Rekonstruktionsgeometrie kennzeichnen, werden hier nicht als Rekonstruktionseinfallwinkel oder Rekonstruktionsausfallwinkel bezeichnet.

### Grundzüge der Erfindung und bevorzugte Ausführungsformen

Zur Lösung der technischen Aufgabe wird ein Verfahren zum Herstellen eines individualisierten Hologramms vorgeschlagen, das die Schritte umfasst:
Bereitstellen eines Hologrammmasters,
Anordnen eines holografischen Aufzeichnungsmaterials relativ zu dem Hologrammmaster;
Erzeugen kohärenten Lichts
räumliches Modulieren des kohärenten Lichts gemäß eines Individualisierungsmusters zur Kodierung von Individualisierungsinformationen und
Führen des modulierten kohärenten Lichts, so dass das holografische Aufzeichnungsmaterial mit dem kohärenten modulierten Licht durchstrahlt wird und zumindest ein Teil des kohärenten modulierten Lichts an dem Hologrammmaster reflektiert oder gebeugt wird, um mit dem das holografische Aufzeichnungsmaterial durchstrahlenden kohärenten Licht zu interferieren und so das Hologramm in das Aufzeichnungsmaterial zu belichten, wobei mittels des Hologrammmasters, ein in dem Hologrammmaster gespeichertes Hintergrundmuster, das mindestens zwei Regionen umfasst, dem die kodierten Individualisierungsinformationen umfassenden modulierten kohärenten Licht beim Reflektieren oder Beugen an dem Hologrammmaster aufgeprägt wird, so dass das Hintergrundmuster durch die Individualisierungsinformationen individualisiert bei einer Rekonstruktion des belichteten Hologramms mit den Individualisierungsinformationen wahrnehmbar oder erfassbar ist. Im Gegensatz zu den bekannten Ausführungsformen von holografischen Sicherheitselementen, die ein Hologramm umfassen und bei denen die individualisierte Information vor einem gleichmäßigen Hintergrund "dargestellt" ist, ist zusätzlich zu der individualisierten Information das Hintergrundmuster, wenn auch verdeckt oder durch die Individualisierung verändert, beobachtbar. Eine Fälschung eines solchen Hologramms ist stark erschwert, da für eine Fälschung ein Hologrammmaster zu erstellen ist, der das Hintergrundmuster umfasst. Da dieses in den Sicherheitselementen, d.h. in den belichteten Hologrammen, aufgrund der individualisierten Informationen teilweise "verdeckt" ist, kann ein "gefälschter" Hologrammmaster nicht ohne weiteres aus einem Originalhologramm eines Original-Sicherheitselements über eine Kontaktkopie hergestellt werden. Mit dem Wort verdeckt ist hierbei gemeint, dass ein Teil der Region, vorzugsweise ein Teil einer Kontur einer Region nicht in das Hologramm belichtet wird, da aufgrund der Individualisierung dieser Hologrammbereich gar nicht (bei einem Hell-Dunkel-Individualisierungsmuster) oder nur mit einer verringerten Intensität (bei einem Individualisierungsmuster, dass auch Helligkeitsstufen kennt) belichtet wird. Es versteht sich für den Fachmann, dass die angegebenen Verfahrensschritte nicht alle notwendigerweise in der hier angegebenen Reihenfolge ausgeführt werden müssen, sondern teilweise vertauscht werden können.

Es entsteht somit ein individualisiertes Hologramm umfassend ein holografisches Aufzeichnungsmaterial, in dem eine holografische Struktur gespeichert ist, die Individualisierungsinformationen in Form eines Individualisierungsmusters umfasst, dadurch gekennzeichnet, dass in der holografischen Struktur zusätzlich ein Hintergrundmuster, das mindestens zwei Regionen umfasst, gespeichert ist, dass das Hintergrundmuster durch die Individualisierungsinformationen individualisiert bei einer Rekonstruktion des Hologramms mit den Individualisierungsinformationen wahrnehmbar oder erfassbar ist.

Ferner wird eine Vorrichtung zum Herstellen eines Hologramms als Sicherheitsmerkmal eines Sicherheitsdokuments vorgeschlagen, umfassend einen Hologrammmaster, eine Aufnahme und/oder Führung für ein holografisches Aufzeichnungsmaterial und eine Lichtquelle, die kohärentes Licht emittiert, einen Modulator, beispielsweise einen Spatial Light Modulator, der so angeordnet ist, dass das kohärente Licht örtlich gemäß einem Individualisierungsmuster zum Kodieren von Individualisierungsinformationen modulierbar ist oder moduliert wird, sowie eine Abbildungsoptik zum Führen des kohärenten Lichts, so dass das holografische Aufzeichnungsmaterial mit dem kohärenten modulierten Licht durchstrahlt wird und zumindest ein Teil des kohärenten modulierten Lichts an dem Hologrammmaster reflektiert oder gebeugt wird, um mit dem das holografische Aufzeichnungsmaterial durchstrahlenden kohärenten Licht zu interferieren und so das Hologramm in das Aufzeichnungsmaterial zu belichten, wobei der Hologrammmaster, in einem Bereich, in dem das modulierte kohärente Licht von dem Hologrammmaster reflektiert oder gebeugt wird, so ausgebildet ist, dass dem gebeugten oder reflektierten kohärenten modulierten Licht ein mindestens zwei Regionen umfassendes Hintergrundmuster aufgeprägt wird, so dass das Hintergrundmuster durch die Individualisierungsinformationen individualisiert bei einer Rekonstruktion des belichteten Hologramms mit den Individualisierungsinformationen wahrnehmbar oder erfassbar ist. Der Hologrammmaster ist somit so ausgebildet, dass er das Hintergrundmuster dem Teil des kohärenten Lichts aufprägt, der anschließend mit dem das holografische Aufzeichnungsmaterial durchstrahlenden modulierten Licht zur Interferenz gebracht wird. Das Hintergrundmuster ist in dem Hologrammmaster so codiert, dass ein Beugungs- und/oder Reflexionsverhalten die mindestens zwei Regionen des Hintergrundmusters repräsentiert.

Erfindungsgemäß ist vorgesehen, dass der Hologrammmaster und die Individualisierungsinformationen so aufeinander abgestimmt werden, dass mindestens ein Teil einer Kontur einer der mindestens zwei Regionen des Hintergrundmusters durch die Individualisierungsinformationen verändert, insbesondere verdeckt, wird. Während "verdeckte" oder nicht abgebildete Bereiche einer Region des Hintergrundmusters, die dieselben Eigenschaften wie andere Bereiche derselben Region aufweisen, prinzipiell aus einer durch die Individualisierung veränderte Vorlage (ein echtes individualisiertes Hologramm) rekonstruierbar sind, können die Konturen eines Bereichs nur sehr viel schwerer erraten werden. Eine Fälschungssicherheit nimmt somit zu, wenn Anteile der Konturen der mindestens zwei Regionen nicht in das Hologramm abgebildet werden.

Eine solche Abstimmung kann beispielsweise vorsehen, dass das kohärente Licht mittels des Individualisierungsmusters so moduliert wird, dass ein vorgegebener Flächenanteil, von vorzugsweise mindestens 20%, bevorzugter von mindestens 30%, des Hintergrundmusters nicht mit einer maximalen Lichtintensität beleuchtet wird, vorzugsweise gar nicht beleuchtet wird.

Ein Erstellen eines gefälschten Hologrammmasters anhand eines oder meist sogar mehrerer Originalhologramme ist stark erschwert oder unmöglich, wenn der Hologrammmaster mit einem in zwei Dimensionen unregelmäßigen Hintergrundmuster bereitgestellt oder hergestellt wird. Bevorzugt wird somit ein Hologrammmaster, bei dem die unterschiedlichen Regionen ein in zwei Dimensionen unregelmäßiges Hintergrundmuster in dem für eine Individualisierung vorgesehenen Bereich des Hologramms bilden. Bei einem in zwei Dimensionen unregelmäßigen Muster lassen sich Konturabschnitte nicht aus Symmetrieeigenschaften des Hintergrundmusters oder anderen Gesetzmäßigkeiten des Hintergrundmusters ableiten. Vorzugsweise liegen Unregelmäßigkeiten in einer Größenordnung einer Auflösung, mit der Strukturen bei einer Verifikation des Hologramms hinsichtlich einer Echtheit genutzt wird. Soll das Hologramm mittels einer Sichtprüfung eines Menschen verifiziert werden, so liegen die Auflösungsgrenzen im Bereich von etwa 330 Linien pro Zoll bei einem Abstand von 25 cm. Eine Kontur sollte somit eine Unregelmäßigkeit aufweisen, die bei einem im Mittel gradlinigen Verlauf der Kontur dazuführt, dass ein Abstand der Kontur von dem gradlinigen Verlauf in einem Bereich von plus/minus einige 300-tel Zoll (mm) quasi stochastisch, d.h. quasi zufällig schwankt.

Das Hintergrundmuster wird in den Hologrammmaster mit solch einer Präzision und /oder Auflösung eingearbeitet, dass ein Zusammenfügen von aus unterschiedlichen aus Original-Hologrammen abgeleiteten Teilen des Masterhologramms bzw. des Hintergrundmusters nicht oder nur sehr schwer "versatzfrei" möglich ist. Trotz eines beispielsweise in zwei Dimensionen unregelmäßigen Hintergrundmusters, fallen nämlich bei einer Betrachtung entlang einer Zusammensetzungskante, die in der Regel gradlinig sein wird, auftretende Versätze in allen oder fast allen die Zusammensetzungskante schneidenden Konturen auf. Diese Versätze sind als Makrostruktur für einen menschlichen Betrachter wahrnehmbar, so dass mit einem auf diese Wiese gefälschten Masterhologramm hergestellte Hologramme als Fälschungen identifizierbar sind.

Der Hologrammmaster ist erfindungsgemäß als Masterhologramm ausgeführt, in das das Hintergrundmuster holografisch gespeichert ist

Bei einer Ausführungsform der Erfindung wird der Hologrammmaster so bereitgestellt oder hergestellt, dass ein Aufprägen des Hintergrundmusters so erfolgt, dass das belichtete Hologramm unter mindestens einer optimalen Rekonstruktionsgeometrie, die durch einen Rekonstruktionseinfallwinkel und einen Rekonstruktionsausfallwinkel festgelegt ist und unter der ein Maximum der in dem Hologramm gespeicherten Individualisierungsinformationen wahrnehmbar ist, so rekonstruiert, dass das Hintergrundmuster Regionen unterschiedlicher Beugungseffizienz umfasst. Bei einer Verifikation wird das Hologramm somit unter einer Rekonstruktionsgeometrie (gegebenenfalls einer von mehreren Möglichen) rekonstruiert, so dass möglichst die gesamte Individualisierungsinformation detektierbar, wahrnehmbar, insbesondere sichtbar, ist. Bei dieser Rekonstruktion unterscheiden sich die unterschiedlichen Regionen hinsichtlich ihrer Beugungseffizienz unter genau dieser gewählten Rekonstruktionsgeometrie. Dieses bedeutet, dass unterschiedliche Bereiche, die durch die Individualisierung nicht oder in gleicher Weise beeinflusst sind, von zwei unterschiedlichen Regionen unterschiedliche Beugungseffizienzen aufweisen.

Bei einer Ausführungsform ist das Hintergrundmuster somit so ausgebildet oder wird es so ausgebildet und das Hintergrundmuster dem kohärenten modulierten Licht so aufgeprägt, dass es durch unterschiedliche Regionen, die unterschiedliche Beugungseffizienzen unter einer vorgegebenen Rekonstruktionsgeometrie aufweisen, in dem Hologramm gespeichert wird, wenn das Individualisierungsmuster keine Modulation des kohärenten Lichtes bewirkt. Das Hintergrundmuster ist somit über unterschiedliche Beugungseffizienzen bei einer vorgegebenen Rekonstruktionsgeometrie für das Hologramm in diesem codiert.

Als leicht durch eine Sichtprüfung zu verifizierendes Sicherheitsmerkmal hat sich eine Abbildung des Gesichts einer Person herausgestellt. Bei einer bevorzugten Ausführungsform umfasst das Individualisierungsmuster daher ein Passbild einer menschlichen Person.

Insbesondere für bildartige Individualisierungsmuster eignen sich Hintergrundmuster, die geringe Kontrastunterschiede in Blickrichtung der optimalen Rekonstruktion aufweisen. Erfindungsgemäß liegen somit die unterschiedlichen Beugungseffizienzen der unterschiedlichen Regionen des Hintergrundmusters alle oberhalb eines vorgegebenen Schwellenwertes.

Bei einer bevorzugten Weiterbildung liegen die unterschiedlichen Beugungseffizienzen der unterschiedlichen Regionen des Hintergrundmusters alle innerhalb eines vorgegebenen Intervalls, das vorzugsweise eine Spanne von 30% umfasst. Die unterschiedlichen Regionen sind beispielsweise so ausgestaltet, dass ihre Rekonstruktionsgeometrie in einer Winkelspanne von kleiner ± 30°, vorzugsweise kleiner ± 20°, am bevorzugtesten von kleiner ± 10° um eine vorgegebene "Soll-Rekonstruktionsgeometrie" liegt, die durch einen Soll-Einfallwinkel für die Beleuchtung und einen Soll-Ausfallwinkel, unter dem die Rekonstruktion des Hologramms mit maximaler Helligkeit zu beobachten sein soll. Eine bevorzugte Soll-Rekonstruktionsgeometrie ist eine 45°-90°-Rekonstruktionsgeometrie, bei der bei einer Einstrahlung von Rekonstruktionslicht unter 45°gegenüber einer Ebene des Hologramms (Ebene des holografischen Aufzeichnungsmaterials) erfolgt und eine maximale Helligkeit unter 90° gegenüber der Ebene des Hologramms wahrgenommen werden kann.

Werden beispielsweise zwei unterschiedliche Regionen zum Ausbilden des Hintergrundmusters verwendet, die jeweils eine Winkelselektivität von ca. 4° aufweisen, so weichen die eine Rekonstruktionengeometrie vorzugsweise um 8° von der anderen ab. Hierbei wird als Winkelselektivität ein Winkel verstanden, um den das Hologramm bei einer anfänglich vorliegenden optimalen Rekonstruktionsgeometrie für eine Region um den Auftreffpunkt des Rekonstruktionslichts verkippt werden muss bzw. verkippt werden kann, um einen Intensitätsabfall von 50 % zu erhalten. In dem soeben beschriebenen Fall existiert ein Winkel bzw. eine Verkippung, bei der beide Regionen etwa gleich hell wahrgenommen werden. Die eine Rekonstruktionsgeometrie kann mit der Soll-Rekonstruktionsgeometrie übereinstimmen.

Besonders vorteilhaft ist es, das hergestellte Hologramm als optisch dickes Hologramm, vorzugsweise als Volumenhologramm herzustellen. Besonders bevorzugt wird eine, zumindest primäre, Herstellung als optisch dickes Reflexions-Volumenhologramm. Ein solches lässt sich einfach durch eine Sichtprüfung hinsichtlich seiner Echtheit und Unverfälschtheit überprüfen. Zumindest primär soll hierbei bedeuten, dass dem Hologramm vorteilhafterweise in einigen Ausführungsformen zusätzlich noch ein so genanntes verstecktes Sicherheitsmerkmal zugefügt wird. Der Hologrammmaster wird in einem solchen Fall als ein Masterhologramm bereitgestellt oder hergestellt, in das zusätzlich zu dem Hintergrundmuster ein verstecktes Sicherheitsmerkmal codiert ist, insbesondere ein Projektionshologramm oder ein Mehrrichtungsstrahlerzeugungselement. Als Mehrrichtungsstrahlerzeugungselement wird ein Sicherheitsmerkmal angesehen, das bei einer Beleuchtung mit kohärentem Licht, beispielsweise Laserlicht, einer vorgegebenen Wellenlänge unter einem vorgegebenen Einstrahlungswinkel Licht in mindestens zwei voneinander getrennte Raumwinkelbereiche beugt. Dieses bedeutet, dass durch die Beugung mehrere Lichtstrahlen erzeugt werden, die unter genau definierten Winkeln aus dem Hologramm austreten.

Als kontrastarm werden zusätzlich Hintergrundmuster angesehen, bei denen sich die optimalen Rekonstruktionswinkel der einzelnen Regionen nur in einem begrenzten Winkelbereich voneinander unterscheiden. Vorzugsweise liegen die optimalen Rekonstruktionswinkel alle in einem Winkelbereich von etwa 10° bis 20°.

Neben Hintergrundmustern mit Regionen, deren Beugungseffizienzen alle oberhalb eines vorgegebenen Schwellenwertes liegen, sind zumindest für kontrastreiche Individualisierungsmuster, wie sie alphanumerische Zeichen darstellen, auch Hintergrundmuster geeignet, die nicht beugende oder schwach beugende Regionen in dem Hologramm erzeugen. Um jedoch eine Wahrnehmung der Individualisierungsinformationen nicht negativ zu beeinflussen, ist bei einer Ausführung vorgesehen, dass Regionen mit einer Beugungseffizienz unterhalb eines vorgegebenen weiteren Schellenwertes an jeder Stelle höchstens eine maximale Ausdehnung dₘₐₓ aufweisen, die kleiner als ein n-faches einer Auflösung ist, die bei einer Verifikation des Hologramms hinsichtlich seiner Echtheit und/oder Unverfälschtheit wahrnehmbar oder detektierbar ist. Die Zahl n liegt hierbei vorzugsweise im Bereich von 1 bis 10. Als Auflösung wird hier die Auflösung bei Betrachtung durch einen Menschen mit 100 % Sehschärfe bei einem typischen Betrachtungsabstand von minimal 25 cm verstanden. Insgesamt sollte höchstens 50 % der für die Individualisierung genutzten Hintergrundfläche eine Beugungseffizienz unterhalb des vorgegebenen weiteren Schwellenwertes aufweisen. Der weitere vorgegebene Schwellenwert liegt vorzugsweise mindestens unterhalb einer Beugungseffizienz von 50 %, bevorzugt unterhalb von 30 %, wobei der vorgegebene Schwellenwert für die gut bzw. optimal beugende(n) Region(en) bei einer Beugungseffizienz vorzugsweise oberhalb von 70 %, bevorzugter oberhalb von 80 % und am bevorzugtesten oberhalb von 90 % liegt.

Des Weiteren ist es vorteilhaft, wenn eine Konturendichte oberhalb eines vorgegeben Wertes liegt. Vorzugsweise liegt eine Konturendichte bei 10 Konturen pro cm. So können auch Linienmuster, die aus (stärker) beugenden und nicht (schwächer) beugenden Regionen bestehen, zum Einsatz kommen.

Bei einer weiteren Ausführungsform ist vorgesehen, dass der Hologrammmaster mit mindestens zwei Regionen unterschiedlicher Streucharakteristik bereitgestellt und/oder erzeugt wird, die jeweils unter einem gleichen Belichtungseinfallwinkel einfallendes monochromatisches kohärentes Licht abhängig von ihrer Streucharakteristik in unterschiedlich große begrenzte Winkelbereiche um denselben Belichtungsausfallwinkel reflektieren und/oder beugen. Diese Eigenschaft des Hologrammmasters überträgt sich auf das Hologramm. Unterschiedlich stark streuende Regionen werden als unterschiedlich hell wahrgenommen, wen man davon ausgeht, dass die Gesamtbeugungseffizienzen über die unterschiedlichen Winkelbereiche gleich sind.

Um ein Hologramm möglichst fälschungssicher in einem Sicherheitsdokument zu integrieren, wird das Hologramm vorzugsweise hergestellt, auf einem Substrat angeordnet oder angebracht und gegebenenfalls mit weiteren Schichten zu einem Dokumentkörper laminiert.

Es wird angemerkt, dass die Belichtung des Hologramms mit sichtbarem Licht oder auch Licht im UV- oder IR-Spektralbereich erfolgen kann. Die Belichtung kann ebenfalls mit Licht unterschiedlicher Wellenlängen, d.h. farbig, erfolgen. Findet eine Individualisierung des Hologramms statt, so können für die unterschiedlichen Wellenlängen unterschiedliche Individualisierungsmuster verwendet werden.

Bei einer bevorzugten Ausführungsform sind mehr als zwei Regionen unterschiedlicher Streucharakteristiken vorgesehen. Beispielsweise kann eine schwächer streuende Region eine stärker streuende Region umschließen, die wiederum eine ganz schwach streuende Region umschließt.

Die mit Schwerpunkt für das Verfahren zur Herstellung eines Hologramms beschriebenen Merkmale finden ihre Entsprechungen in einem so hergestellten Hologramm und der Vorrichtung zu dessen Herstellung. Sie weisen dort dieselben Vorteile auf.

Die Erfindung wird nachfolgend unter Bezugnahme auf eine Zeichnung näher erläutert. Hierbei zeigen:
- Fig. 1: eine schematische Darstellung einer Vorrichtung zum Herstellen eines Hologramms;
- Fig. 2: eine schematische Darstellung von Intensitätsverteilungen;
- Fig. 3a, 3b: eine schematische Darstellung zur Erläuterung einer Herstellung eines Hologrammmasters;
- Fig. 4a bis 4d: schematische Ansichten eines Sicherheitsdokuments mit einem Holgramm unter vier verschiedenen Rekonstruktionsgeometrien;
- Fig. 5: schematische Darstellung eines Beugungsverhaltens unterschiedlicher Regionen eines Hintergrundmusters;
- Fig. 6a: einen schematischen Ausschnitt eines Hintergrundmusters;
- Fig. 6b: einen Ausschnitt eines mit dem Hintergrundmuster nach Fig. 6a hergestellten individualisierten Hologramms;
- Fig. 6c: schematisch die Situation, vor der ein Fälscher eines Hologrammmasters steht, der diesen aus dem Hologramm nach Fig. 6b ableiten will;
- Fig. 7a: eine schematische Darstellung eines Hintergrundmusters;
- Fig. 7b: eine Darstellung eins mit dem Hintergrundmuster nach Fig. 7a aufgenommenen kreisförmigen individualisierten Hologramms;
- Fig. 7c: eine schematische Darstellung eines Hologrammmasters mit einem versteckten Sicherheitsmerkmal; und
- Fig. 7d: eine schematische Ansicht eines Sicherheitsdokuments mit einem mit dem Hologrammmaster nach Fig. 7c hergestellten individualisierten Hologramm als Sicherheitselement.

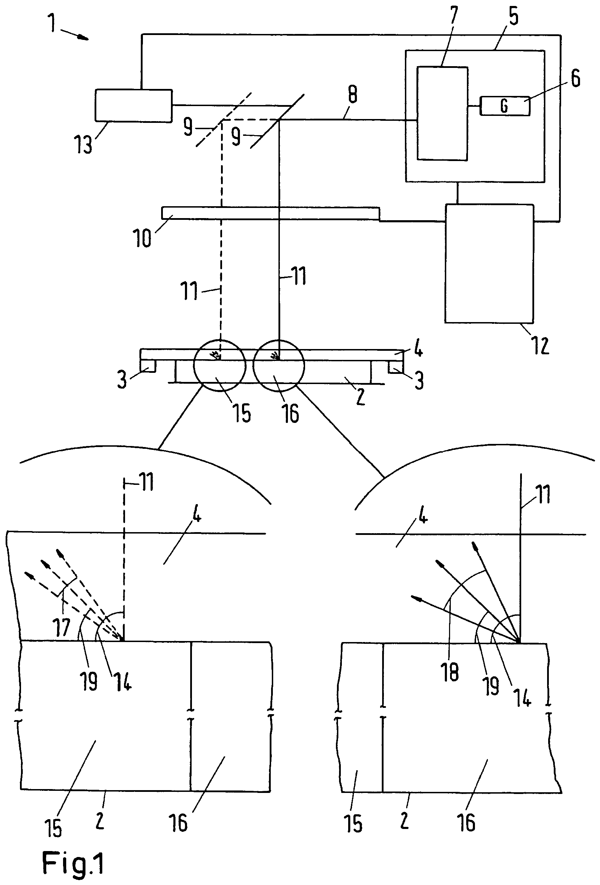

In Fig. 1 ist schematisch eine Vorrichtung 1 zum Herstellen eines Hologramms dargestellt. Vor einem Hologrammmaster 2 ist auf einer Führung 3 ein holografisches Aufzeichnungsmaterial 4 angeordnet. Die Führung 3 ist relativ zu dem Hologrammmaster 2 so angeordnet, dass das holografische Aufzeichnungsmaterial 4 vorzugsweise vollflächig in Kontakt mit dem Hologrammmaster 2 ist. Für den Fachmann versteht es sich, dass hierbei eine transparente Schutzschicht (nicht dargestellt), vorzugsweise aus Polyethylenterephthalat (PET), zwischen dem holografischen Aufzeichnungsmaterial 4 und dem Hologrammmaster 2 angeordnet sein kann. Diese Schutzschichten erleichtert ein Ablösen des holografischen Aufzeichnungsmaterials 4 von dem Hologrammmaster 2, nachdem das Hologramm fertig in das holografische Aufzeichnungsmaterial 4 belichtet ist.

Der Hologrammmaster 2 ist erfindungsgemäß eine holografisch hergestellte Struktur, die beispielsweise durch ein holografisches Abbilden einer Mattscheibe erzeugt ist, wie unten genauer erläutert wird. Alternativ können Regionen unterschiedlicher Beugungseffizienz durch eine unterschiedliche lange Belichtungsdauer bei einer holografischen Herstellung eines Hologrammmasters als Masterhologramm erzeugt werden. Ein nicht erfindungsgemäßer Hologrammmaster verwendet sägezahnartige oder schuppenartige reflektierende oder gerichtet streuende Flächen, die gegen eine Oberfläche des Hologrammmasters je nach Zugehörigkeit zu einer der mindestens zwei Regionen des Hintergrundmusters unterschiedlich geneigt sind. Einfallendes Licht wird somit unter unterschiedlichen Winkeln reflektiert. Eine solche Struktur kann beispielsweise mittels photolithographischer Verfahren hergestellt werden. Ferner eignen sich Prägehologrammstrukturen oder andere geprägte beugende Strukturen als Hologrammmaster. Außerdem sind beliebige Kombinationen der genannten Hologrammstrukturen möglich.

Die Vorrichtung 1 umfasst ferner eine Lichtquelle 5, die in der Lage ist, kohärentes Licht 8 zu erzeugen. Dieses kann im sichtbaren, ultravioletten oder infraroten Spektralbereich liegen. Hierfür kann die Lichtquelle 5 beispielsweise einen Laser 6 umfassen, der kohärentes und in der Regel monochromatisches Licht erzeugt. Die Lichtquelle 5 kann in einer Ausführungsform einen Monochromator 7 umfassen, der das kohärente Licht monochromatisiert, wenn beispielsweise anstelle des Lasers 6 eine andere Lichterzeugungseinheit verwendet wird oder der Laser 6 Licht mehrerer Wellenlängen produziert.

Das kohärente Licht 8 wird von der Lichtquelle 5 vorzugsweise als streifenförmiger Lichtstrahl bereitgestellt. Dies bedeutet, dass der Lichtstrahl quer zur Ausbreitungsrichtung entlang einer Raumdimension ausgedehnt ist. Diese Ausdehnung entspricht vorzugsweise zumindest einer Breite des Hologramms, welches hergestellt werden soll. Im dargestellten Beispiel ist das kohärente Licht 8 senkrecht zur Zeichenebene streifenförmig ausgedehnt.

Die Vorrichtung 1 umfasst ferner eine Abbildungsoptik, die hier vereinfachend als Umlenkspiegel 9 dargestellt ist. Die Abbildungsoptik ist so ausgebildet, dass das kohärente Licht 8 durch einen als Spatial Light Modulator 10 ausgeführten Modulator geführt wird, in dem dieses räumlich moduliert wird. (Andere Ausführungsformen verwenden individuell belichtete und entwickelte Filme als Modulatoren). Dies bedeutet, dass unterschiedliche Positionen entlang der streifenförmigen Ausdehnung des kohärenten Lichts 8 quer zur Ausbreitungsrichtung unterschiedlich moduliert werden. Ebenso ist die Modulation von einer lateralen Position, an der das Licht durch den Spatial Light Modulator 10 tritt, abhängig. Die Modulation erfolgt entsprechend eines Individualisierungsmusters für das Hologramm. Der modulierte kohärente Lichtstrahl 11 durchstrahlt das holografische Aufzeichnungsmaterial 4 und wird zumindest zum Teil an dem Hologrammmaster 2 gebeugt und/oder reflektiert. Dem an dem Hologrammmaster gebeugten oder reflektierten Licht wird hierbei ein in dem Hologrammmaster 2 codiertes Hintergrundmuster aufgeprägt. Ist der Hologrammmaster 2 ein Masterhologramm, so kann das Hintergrundmuster in das Masterhologramm gespeichert sein. Dieses Hintergrundmuster wird beim Beugen rekonstruiert. Erfindungsgemäß besitzen unterschiedliche Regionen, die das Hintergrundmuster definieren unterschiedliche Beugungseigenschaften, insbesondere unterschiedliche Beugungseffizienzen hinsichtlich einer einheitlichen Rekonstruktionsgeometrie des Masterhologramms. Dieses bedeutet, dass bei einer Ausführungsform unter einem Belichtungseinfallwinkel auf das Masterhologramm auftreffendes (beispielsweise monochromatisches) Licht unter einem einheitlichen Belichtungsausfallwinkel von den verschiedenen Regionen des Hintergrundmusters gebeugt wird, eine Beugung jedoch unterschiedlich effizient erfolgt. Alternativ können die unterschiedlichen Regionen das modulierte kohärente Licht in unterschiedlich große Winkelbereiche um denselben Belichtungsausfallwinkel beugen. Wieder andere Ausführungsformen sehen vor, dass die Regionen das unter demselben Belichtungseinfallwinkel auftreffende Licht unter leicht unterschiedlichen Winkeln beugen. D.h., die Belichtungsausfallwinkel der einzelnen Regionen unterscheiden sich. Vorzugsweise variieren die unterschiedlichen Belichtungsausfallwinkel in einer vorgegebenen Winkelspanne von vorzugsweise 10°bis 20° um einen mittleren Belichtungsausfallwinkel. Ausführungsformen, die sägezahnartige oder schuppenartige Flächen umfassen, reflektieren das individualisierte, d.h. modulierte, kohärente Licht unter unterschiedlichen Winkeln zurück in das holografische Aufzeichnungsmaterial 4. Das reflektierte und/oder gebeugte Licht interferiert mit dem das holografische Aufzeichnungsmaterial 4 durchstrahlenden Licht 11 und belichtet so das Hologramm in das holografische Aufzeichnungsmaterial 4.

Eine Steuereinheit 12 der Vorrichtung 1 ist ausgebildet, eine Relativbewegung des kohärenten Lichts 8 bzw. modulierten kohärenten Lichts 11 einerseits und des holografischen Aufzeichnungsmaterials 4 und des Hologrammmasters 2 andererseits zu steuern. Hierfür ist die Steuereinheit 12 mit einer Antriebseinheit 13 verbunden. Diese ist in der dargestellten Ausführungsform so mit der Abbildungsoptik, d.h. dem Umlenkspiegel 9, gekoppelt, dass über eine Verschiebung des Umlenkspiegels synchronisiert der Spatial Light Modulator 10 sowie der Hologrammmaster 2 streifenweise abgetastet werden. Die Steuereinheit 12 ist ferner so ausgebildet, dass eine Belichtungszeit in dem holografischen Aufzeichnungsmaterial jeweils angepasst an eine spektrale Empfindlichkeit des holografischen Aufzeichnungsmaterials 4 und an die jeweils zur Belichtung des Hologramms verwendete Wellenlänge des kohärenten Lichts 8, 11 angepasst ist. Die erforderliche Belichtungszeit hängt von der Intensität des kohärenten Lichts und der spektralen Empfindlichkeit des holografischen Aufzeichnungsmaterials 4 ab. Somit kann die Steuereinheit 12 entweder eine Intensität der Lichtquelle und/oder eine Relativgeschwindigkeit und/oder eine Belichtungsdauer in einer Position des holografischen Aufzeichnungsmaterials 4 steuern.

Die Belichtung kann in einem so genannten Step-and-Repeat-Verfahren oder kontinuierlich erfolgen, beispielsweise bei einem Trommelbelichtungsverfahren. Bei letzterem ist der Hologrammmaster in oder auf eine Trommel eingearbeitet bzw. aufgebracht, auf der das holografische Aufzeichnungsmaterial aufliegt. Während der Belichtung dreht sich die Trommel. Bei einem Step-and-Repeat-Verfahren wird der zu belichtende Bereich des als Film ausgebildeten holografischen Aufzeichnungsmaterials auf den Master gebracht und kommt dort zur Ruhe. Im Anschluss erfolgt eine Belichtung, z.B. scannend oder vollflächig, die die Kontaktkopie des Hologramms vornimmt. Hierbei werden Laserstrahlen individualisiert. Nach der Belichtung erfolgt ein Weitertransport des als Film ausgebildeten holografischen Aufzeichnungsmaterials, bis der nächste unbelichtete Bereich auf dem Hologrammmaster zur Ruhe kommt.

Beschrieben ist die Beleuchtung mit Licht einer Wellenlänge (Farbe). Ebenso gut kann die Beleuchtung mit unterschiedlichen Wellenlängen erfolgen. Hieran muss lediglich der Hologrammmaster angepasst sein. Eine Individualisierung kann für die unterschiedlichen Wellenlängen unterschiedlich erfolgen. D.h., die unterschiedlichen Wellenlängen können über unterschiedliche Individualisierungsmuster räumlich moduliert werden.

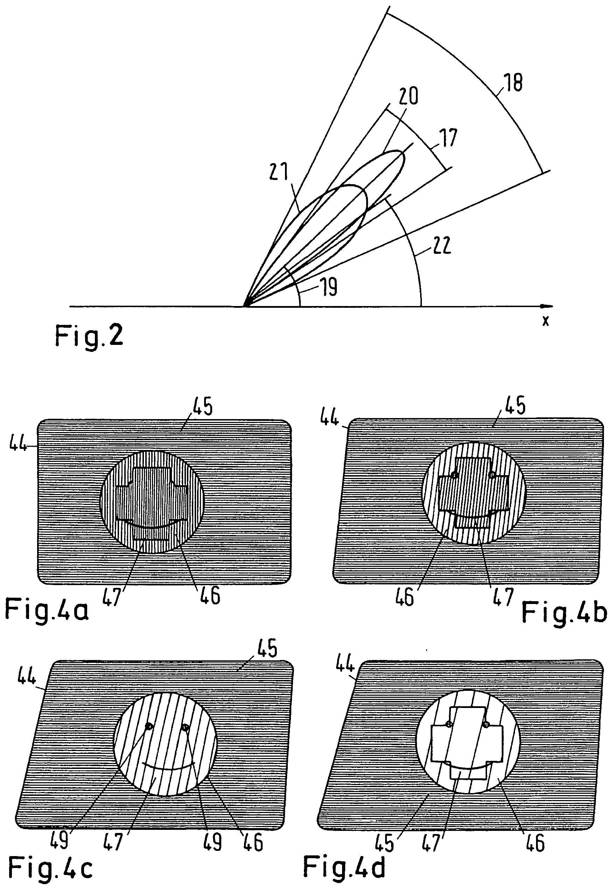

Der Hologrammmaster 2 wird in dem dargestellten Beispiel unter einem Belichtungseinfallwinkel 14 von 90° von dem modulierten kohärenten Licht 11, welches das holografische Aufzeichnungsmaterial durchstrahlt hat, beleuchtet. Der Hologrammmaster 2 umfasst in der dargestellten Ausführungsform eine schwächer streuende Region 15 und eine stärker streuende Region 16. In beiden Regionen 15, 16 wird das Licht in unterschiedliche Winkelbereiche 17, 18 um denselben Belichtungsausfallwinkel 19 von 45° reflektiert und/oder gebeugt. Beispielhaft wird angenommen, dass der Winkelbereich der stärker streuenden Region 16 Winkel von 45°±20° umfasst und die schwächer oder geringer streuende Region 15 Winkel von 45°±10° umfasst. Die unter den verschiedenen Winkeln beobachteten Intensitäten hängen von dem jeweiligen Winkel ab. Beide Regionen 15, 16 weisen eine Intensitätsverteilung auf, die bei einer maximalen Abweichung von dem Belichtungsausfallwinkel 19 also bei 25° oder 65° für die stärker streuende Region 16 und bei 35° oder 55°für die schwächer streuende Region bei null beginnt und/oder endet. Je mehr man sich dem Belichtungsausfallwinkel 19 nähert, desto größer wird die Intensität in beiden Intensitätsverteilungen. Diese erreichen jeweils bei dem Belichtungsausfallwinkel 19 ein Intensitätsmaximum. Die Intensitätsverteilung 20 für die schwächer streuende Region 15 und die Intensitätsverteilung 21 für die stärker streuende Region 16 sind schematisch in Fig. 2, welches ein Polardiagramm ist, dargestellt. Die Intensität ist durch einen Abstand vom Ursprung gegeben. Der Winkel ist gegen die X-Achse im mathematisch positiven Sinn gemessen. Zu erkennen ist, dass die beiden Intensitätsverteilungen unter einem ausgezeichneten Winkel 22 die gleiche Intensität aufweisen. Unter diesem Winkel sind die Rekonstruktionen der schwächer streuenden Region 15 und der stärker streuenden Region 16 gleich intensiv bzw. gleich hell.

Die hier erläuterten Winkelabhängigkeiten des Hologrammmasters 2 übertragen sich auf das in das holografische Aufzeichnungsmaterial 4 belichtete Hologramm. Dieses gilt auch bei anderen Ausführungsformen für andere optische Eigenschaften, die das Hintergrundmuster definieren. Das fertige Hologramm wird anschließend vorzugsweise in ein Sicherheitsdokument integriert. Hierzu wird es bevorzugt zwischen Schichten angeordnet, von denen eine als Substrat dient, auf die das Hologramm aufgebracht wird.

Anschließend werden die schichten zu einem Dokumentkörper laminiert. Eine andere bevorzugte Integration ist ein Aufkleben des fertigen Hologramms beispielsweise auf ein als Kunststoffkarte ausgebildetes Sicherheitsdokument. In das Sicherheitsdokument können weitere Sicherheitsmerkmale integriert sein.

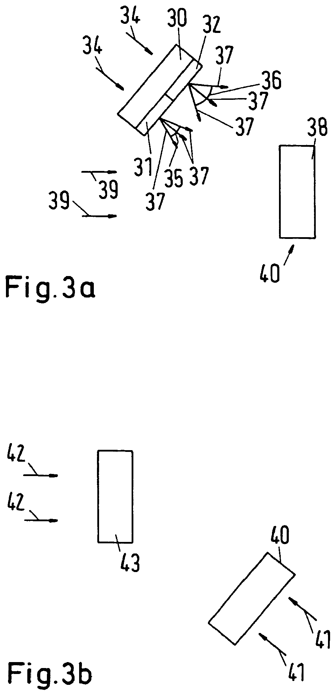

Ein solches Sicherheitsdokument mit einem Hologramm wird unten mit Bezug auf Fig. 4a bis 4d näher beschrieben. Zunächst wird hier eine mögliche Herstellung des Hologrammmasters 2 anhand der Fig. 3a und 3b schematisch erläutert.

Auf einen ebenen transparenten Träger 30, der beispielsweise als polierte Glasplatte ausgebildet sein kann werden unterschiedliche transparente Lacke aufgebracht, die entsprechend eine Schicht 31 mit einer geringeren Rauigkeit und eine Schicht 32 mit einer größeren Rauigkeit bilden (vgl. Fig. 3a). Der Lack wird vorzugsweise durch einen Druck aufgetragen, z.B. Durchdruck (Siebdruck), Hochdruck (Buchdruck, Letterset), Tiefdruck (Rastertiefdruck, Stichtiefdruck), Flachdruck (Offset, Nassoffset, Trockenoffset), Digitaldruck (Inkjet). Der Träger 30 mit den Schichten 31,32 stellt eine Mattscheibe dar. Der Träger 30 und die Schichten 31, 32 werden anschließend von kohärentem monochromatischem Licht 34 der Wellenlänge durchstrahlt, die an die Wellenlänge angepasst ist, mit der auch später das Hologramm (vgl. Fig. 1) hergestellt werden soll. Die Anpassung erfolgt so, dass ein etwaiges Schrumpfen des holografischen Aufzeichnungsmaterials beim Entwickeln berücksichtigt wird. An den Schichten 31, 32 wird das Licht in Winkelbereiche 35, 36 gestreut, die mit den Winkelbereichen 17, 18 nach Fig. 1 korrespondieren. Das gestreute kohärente Licht 37 wird in ein holografisches Aufzeichnungsmaterial 38 mit hierzu kohärentem Referenzlicht 39 so zur Interferenz gebracht, dass ein Transmissionshologramm 40 entsteht. Dieses Transmissionshologramm 40 wird, wie in Fig. 3b dargestellt ist, so mit kohärentem Licht 41 rekonstruiert und weiterem hierzu kohärentem Referenzlicht 42 in einem weiteren Aufzeichnungsmaterial 43 zur Interferenz gebracht, so dass die Rekonstruktion des Transmissionshologramms 40 in das weitere holografische Aufzeichnungsmaterial 43 als Volumen-Transmissionshologramm belichtet wird, welches als Hologrammmaster 2 in der Vorrichtung 1 nach Fig. 1 eingesetzt werden kann. Soll der Hologrammmaster 2 für unterschiedliche Wellenlängen rekonstruieren, so ist der beschriebene Vorgang mit diesen Wellenlängen analog auszuführen.

Ein Hologrammmaster, der Regionen unterschiedlicher Streucharakteristiken aufweist, kann in nicht erfindungsgemäßer Ausgestaltung ebenfalls durch ein Aufbringen eines Lackes oder mehrerer Lacke auf eine oben beschriebene sägezahnartige oder schuppenartige Struktur erzeugt werden.

Hologrammmaster, die Regionen unterschiedlicher Beugungseffizienz oder Regionen umfassen, die unter leicht unterschiedlichen Winkeln beugen, können durch holografische Verfahren, die dem Fachmann bekannt sind, hergestellt werden. Beispielsweise kann der Hologrammmaster als Volumenhologramm hergestellt bzw. ausgebildet werden. Andere nicht erfindungsgemäße Ausführungsformen sehen vor, dass der Hologrammmaster als Prägehologramm ausgebildet ist oder wird. Verfahren zum Erzeugen von Volumenhologrammen und Prägehologrammen sind dem Fachmann bekannt und daher hier nicht im Detail beschrieben.

In Fig. 4a bis 4d sind vier Ansichten eines Sicherheitsdokuments 44 unter vier verschiedenen Rekonstruktionsgeometrien für ein kreisförmig ausgebildetes Hologramm 45 dargestellt. Die vier Rekonstruktionsgeometrien entsprechen vier unterschiedlichen Verkippungen des Sicherheitsdokuments 44 relativ zu einer Betrachtungsrichtung und einer Beleuchtungsrichtung.

Das Hologramm 45 umfasst als Hintergrundmuster eine kreisförmige stärker streuende Region 46, die eine kreuzförmig ausgebildete schwächer streuende Region 47 umgibt. Ferner sind in das Hologramm 45 Individualisierungsinformationen in Form eines als stilisiertes Gesicht dargestellten Individualisierungsmusters 49 gespeichert. Die Rekonstruktionsgeometrie, die mit der Ansicht nach Fig. 4a korrespondiert weicht am stärksten von einer optimalen Rekonstruktionsgeometrie ab, deren zugehörige Ansicht in Fig. 4d dargestellt ist. Die Fig. 4b und 4c zeigen Ansichten des Sicherheitsdokuments 44 bzw. des Hologramms 45 für Rekonstruktionsgeometrien, die sich entsprechend schrittweise der optimalen Rekonstruktionsgeometrie annähern.

Unter der stark von der optimalen Rekonstruktionsgeometrie abweichenden Rekonstruktionsgeometrie (vgl. Fig. 4a) rekonstruiert nur die stärker streuende Region 46 mit einer schwachen Intensität. Die schwächer streuende Region 47 wird nicht rekonstruiert. Diese bedeutet, dass der Beleuchtungswinkel und/oder der Betrachtungswinkel größer als der Winkelbereich der Streucharakteristik der schwächer streuenden Region 47 sind.

Nähert man die Rekonstruktionsgeometrie der optimalen Rekonstruktionsgeometrie der beiden Regionen 46, 47 an, so wird die Rekonstruktion der stärker streuenden Region 46 heller (intensiver), die schwächer streuende Region 47 bleibt jedoch zunächst dunkel. Erst ab einer Annäherung, deren zugehörige Ansicht man in Fig. 4b sieht, beginnt auch eine Rekonstruktion der schwächer streuenden Region 47. Eine Helligkeit (Intensität) der schwächer streuenden Region 47 nimmt weiter zu.

In Fig. 4c ist eine Ansicht gezeigt, die mit der ausgezeichneten Rekonstruktionsgeometrie korrespondiert, bei der beide Regionen gleich hell (gleich intensiv) wahrgenommen werden. Gegenüber der Ansicht nach Fig. 4b sind beide Regionen heller. In dieser Stellung ist auch ein Individualisierungsmuster 49 gut zuerkennen.

In Fig. 4d ist schließlich eine Ansicht zu sehen, die bei der optimalen Rekonstruktionsgeometrie aufgenommen ist. Die beiden Regionen 46, 47 haben beide noch einmal an Helligkeit gewonnen, die schwächer streuende Region 47 jedoch stärker als die stärker streuende Region 46. Gegen über den Ansichten nach Fig. 4a und 4b hat eine Kontrastumkehr stattgefunden, die neben dem Vorhandensein des korrekten Hintergrundmusters zur Verifikation einer Echtheit des Hologramms 45 und/oder des Sicherheitsdokuments 44 herangezogen werden kann.

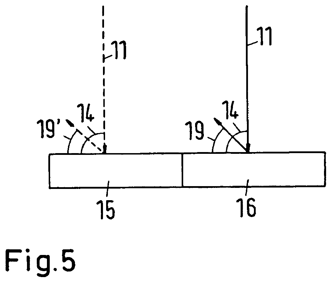

Andere bevorzugte Ausführungsformen sehen vor, dass sich die unterschiedlichen Regionen dadurch unterscheiden, dass das unter einem Belichtungseinfallwinkel 14 von 90° einfallende kohärente modulierte Licht 11 unter leicht unterschiedlichen Belichtungsausfallwinkeln 19, 19' von den unterschiedlichen Regionen 15, 16 gebeugt wird, wie dieses in Fig. 5 beispielhaft gezeigt ist.

Wieder andere Ausführungsformen sehen vor, dass eine Beugungseffizienz der unterschiedlichen Regionen unterschiedlich ist. Benachbarte Regionen weisen hierbei beispielsweise für dieselbe Wellenlänge unter einer identischen Rekonstruktionsgeometrie eine Beugungseffizienz von 85% und 75% auf. Selbstverständlich sind die Werte nur beispielhaft erwähnt.

Das Hintergrundmuster kann allgemein insbesondere eine Vielzahl von Regionen umfassen, die die gleichen optischen Eigenschaften aufweisen. Selbstverständlich kann es auch mehr als zwei unterschiedliche Regionen bzw. Gruppen von Regionen gegeben, die jeweils unterschiedliche optische Eigenschaften aufweisen.

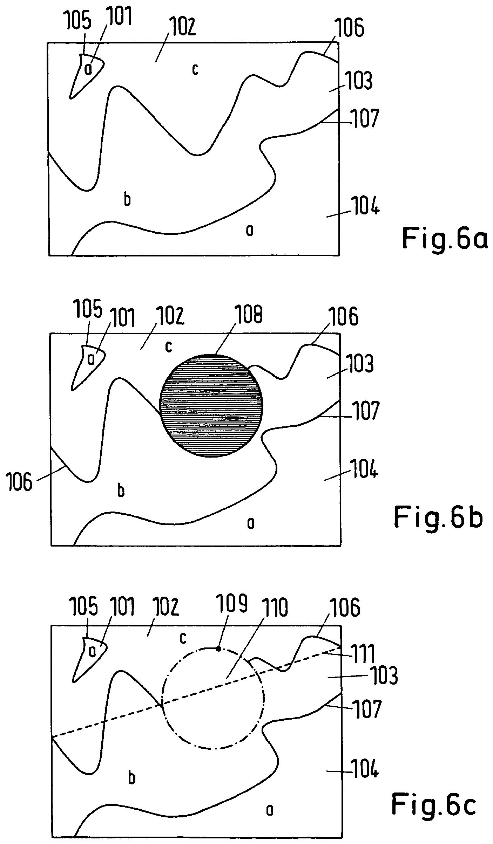

Bei den bisher beschriebenen Ausführungsformen ist eine Topologie des Hintergrundmusters stark vereinfacht. Bevorzugt werden Topologien, bei denen die Regionen unregelmäßige Konturen aufweisen. Ein Beispiel eines Ausschnitts einer ebenfalls noch stark vereinfachten Topologie eines unregelmäßigen Hintergrundmusters ist in Fig. 6a dargestellt. Es umfasst flächige Regionen 101-104, die beispielsweise unterschiedliche Beugungseffizienzen unter derselben Rekonstruktionsgeometrie aufweisen. Die Regionen besitzen Konturen 105-107. Bevorzugt liegt eine Liniendichte in etwa in einer Größenordnung einer Auflösung oder darüber, mit der Strukturen des rekonstruierten Hologramms erkannt werden können. Kleinbuschstaben a bis c stehen stellvertretend für unterschiedliche optische Eigenschaften der Regionen 101 bis 104.

In 6b ist die Rekonstruktion eines individualisierten Hologramms dargestellt, in das das Hintergrundmuster nach Fig. 6a gespeichert ist. Es ist derselbe Ausschnitt wie in Fig. 6a dargestellt, wobei jedoch eine Kreisfläche 108, exemplarisch als ein Auge für die Individualisierungsinformationen erkennbar ist, die ein Teil des Hintergrundmusters, insbesondere einen Abschnitt der Kontur 106 zwischen den Regionen 102 und 103, "verdeckt".

In Fig. 6c ist die Situation dargestellt, vor der ein Fälscher steht, der das Hintergrundmuster nach Fig. 6a fälschen möchte, jedoch nur die Rekonstruktion des Hologramms (oder das Hologramm) nach Fig. 6b kennt. Über das durch eine Strichpunktlinie 109 eingegrenzte Gebiet 110 fehlen dem Fälscher die notwendigen Informationen, insbesondere um die Kontur 106 wieder herzustellen. Selbst wenn die Kontur 106 im Mittel einer Geraden 111 folgt, so variiert ein Abstand von der Geraden 111 "quasi zufällig". Das Hintergrundmuster ist somit im Sinne des hier Beschrieben in zwei Dimensionen unregelmäßig. Vorteilhaft ist es, wenn eine Konturendichte so hoch ist, dass durch zusammenhängende Gebiete des Individualisierungsmusters eine Vielzahl von Konturen gemeinsam "verdeckt" sind.

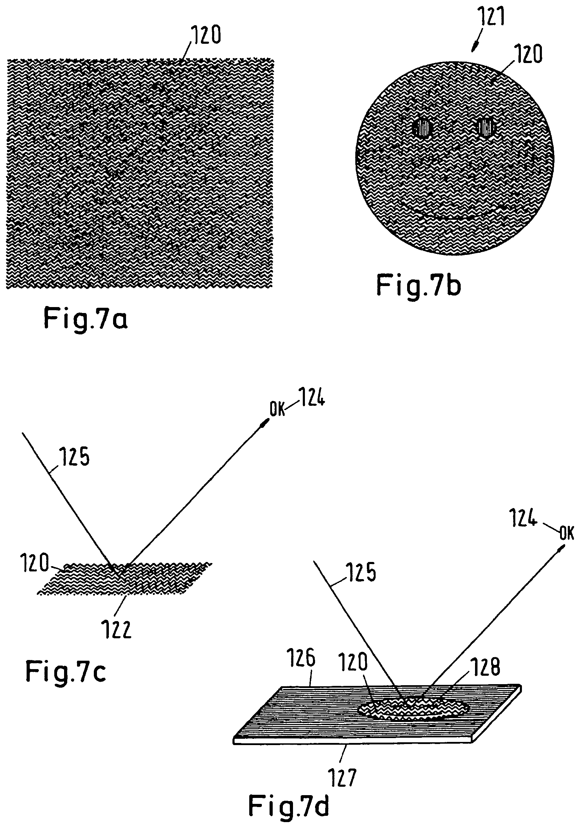

In Fig. 7a ist ein weiteres nicht anspruchsgemäßes Hintergrundmuster 120 gezeigt, bei dem das Hintergrundmuster aus abwechselnd beugenden und nicht beugenden Regionen besteht, die einerseits dicht liegen und andererseits eine so hohe Konturendichte oder Liniendichte aufweisen, dass das Hintergrundmuster von einem Betrachter als strukturierte Fläche wahrgenommen wird. Als Line wird hier ein Regionenpaar aus einer beugenden und einer benachbarten nicht beugenden oder schlecht beugenden Region angesehen. (Eine Konturendichte ist bei Vernachlässigung der Ränder des Musters, doppelt so hoch wie die Liniendichte.) Auch wenn die Regionen oder Linien in Fig. 7a alle gleich ausgebildet sind, sollen sie ein unregelmäßiges Muster repräsentieren, bei dem in der Praxis alle Linien andersartig und nicht voraussagbar ausgebildet sind. Dieses bedeutet, dass die Abstände der beugenden Regionen voneinander entlang der Konturen der Regionen variieren. Vorzugsweise beträgt ein maximaler Abstand dₘₐₓ höchstens ein n-faches einer bei einer Verifizierung des Hologramms beobachtbaren Auflösung. Die Zahl n liegt vorzugsweise im Bereich zwischen 1 bis 10, bevorzugter zwischen 2 bis 4. Ferner ist es Vorteilhaft, wenn die beugenden Regionen flächig größer als die nicht beugenden Regionen sind. Diese beiden Maßnahmen bewirken einzeln und in Kombination, dass ein Individualisierungsmuster, vor dem Hintergrundmuster gut erkennbar bleibt.

In Fig. 7b ist die Rekonstruktion eines individualisierten kreisförmigen Hologramms 121 schematisch dargestellt, das mit dem Hintergrundmuster 120 nach Fig. 7a hergestellt ist.

Vorzugsweise ist in einem Bereich des Hologrammmasters, in dem die Individualisierungsinformationen der unterschiedlichen Individuen sich stark unterscheiden, also zum Beispiel in dem Bereich, in dem typischerweise ein Gesicht dargestellt wird, zusätzlich ein verstecktes Sicherheitsmerkmal eingearbeitet. Dieses ist von seinen Abmessungen so bemessen, dass es mit hoher Wahrscheinlichkeit kontaktkopiert wird, also in Bereichen, in denen eine holografische Belichtung typischerweise stattfindet. Gleichzeitig sollte es Bereiche überstreichen, die mit unterschiedlichen Grauwerten, d.h. Beugungseffizienzen, belichtet werden, um eine nicht erkennbare Nachahmung dieses Bereichs bei einer Fälschung zu erschweren. In Fig. 7c ist schematisch ein Hologrammmaster 122 mit dem Hintergrundmuster 120 dargestellt, in zusätzlich ein Projektionshologramm des Schriftzeugs "OK" 124 als verstecktes Merkmal gespeichert ist, das bei einer Belichtung des Hologrammmasters mit kohärentem Licht 125 rekonstruiert wird.

In Fig. 7d ist schließlich das fertige Hologramm 126 dargestellt, das auf ein Sicherheitsdokument 127 beispielsweise aufgeklebt ist. Das als Gesicht 128 ausgebildete Individualisierungsmuster ist vor dem Hintergrundmuster 120 bei einer Rekonstruktion mit kohärentem Licht 125 gut zu erkennen. Ferner ist der Schriftzug "OK" 124 bei einer Projektion auf eine Projektionsfläche zu erkennen. Das Projektionshologramm kann auch bei einer anderen Wellenlänge belichtet und beobachtet werden, als das als Reflexionshologramm ausgebildete Hologramm der Individualisierungsinformationen vor dem Hintergrundmuster 120.

Allgemein gilt, dass für Individualisierungsinformationen, die "Graustufenwerte" zur Darstellung verwenden, Hintergrundmuster mit flächigen Regionen vorteilhaft sind. Als Darstellungen, die "Graustufenwerte" verwenden, werden hierbei sowohl solche angesehen, die einzelne Bereiche unterschiedlicher Helligkeit umfassen, als auch Rasterdarstellungen, bei denen der Helligkeitsunterschied eines Bereichs durch ein Verhältnis von hellen Bild- oder Rasterpunkten zu dunklen Bild- oder Rasterpunkten erzeugt bzw. festgelegt ist. Für kontrastreiche Informationen wie alphanumerische Zeichen können auch Hintergrundmuster, die als "Linien" ausgebildete Regionen umfassen, verwendet werden. Die Anzahl der gut beugenden Linien (oberhalb eines vorgegebenen Schwellenwertes von beispielsweise 75 % bis 85 % Beugungseffizienz) sollte so gewählt sein, dass mindestens ca. 50 % des numerischen Zeichens beugend rekonstruiert wird (oder bei einer inversen Darstellung mindestens 50 % des Hintergrundmusters).

Bei einem nicht anspruchsgemäßen Hintergrundmuster ähnlich zu dem nach Fig. 7a, bei dem sich gut beugende Linien (Regionen) mit nicht beugenden Regionen etwa gleicher Breite abwechseln, sollten vorzugsweise mindestens 5 beugende Regionen (Linien) pro Zeichenhöhe und insbesondere Zeichenbreite vorhanden sein.

Es ergibt sich, dass lediglich stark vereinfachte Ausführungsformen beschrieben sind. Die einzelnen Merkmale der unterschiedlichen Ausführungsformen können jedoch beliebig miteinander kombiniert werden, um die Erfindung auszuführen.

### Bezugszeichenliste

- 1: Vorrichtung zum Herstellen eines Hologramms
- 2: Hologrammmaster
- 3: Führung
- 4: holografisches Aufzeichnungsmaterial
- 5: Lichtquelle
- 6: Laser
- 7: Zusammenführ- und Auswahleinheit
- 8: kohärentes Licht
- 9: Umlenkspiegel
- 10: Spatial Light Modulator
- 11: moduliertes kohärentes Licht
- 12: Steuereinheit
- 13: Antriebseinheit
- 14: Belichtungseinfallwinkel
- 15: schwächer streuende Region
- 16: stärker streuende Region
- 17: Winkelbereich (schwächer streuende Region)
- 18: Winkelbereich (stärker streuende Region)
- 19, 19': Belichtungsausfallwinkel
- 20: Intensitätsverteilung (schwächer streuende Region)
- 21: Intensitätsverteilung (stärker streuende Region)
- 22: ausgezeichneter Winkel
- 30: Träger
- 31: Schicht (schwächer streuend)
- 32: Schicht (stärker streuend)
- 34: Licht
- 35: Winkelbereich (schwächer streuend)
- 36: Winkelbereich (stärker streuend)
- 37: gestreutes Licht
- 38: holografisches Aufzeichnungsmaterial
- 39: Referenzlicht
- 40: Transmissionshologramm
- 41: Licht
- 42: weiteres Referenzlicht
- 43: weiteres holografisches Aufzeichnungsmaterial
- 44, 44': Sicherheitsdokument
- 45, 45': Hologramm
- 46, 46', 46", 46'": stärker streuende Regionen
- 47, 47': schwächer streuende Regionen
- 48, 48', 48": kreisförmige Bereiche
- 49: Kreise
- 101-104: Regionen
- 105-107: Konturen
- 108: Kreisfläche
- 109: Strichpunktlinie
- 110: Gebiet
- 111: Gerade
- 120: Hintergrundmuster
- 121: Hologramm
- 122: Hologrammmaster
- 124: Schriftzug "OK"
- 125: kohärentes Licht
- 126: Hologramm
- 127: Sicherheitsdokument
- 128: Gesicht

## Patentansprüche

1. Vorrichtung (1) zum Herstellen eines Hologramms (45, 45', 121, 126) als Sicherheitsmerkmal eines Sicherheitsdokuments, umfassend einen Hologrammmaster (2), eine Aufnahme und/oder Führung für ein holografisches Aufzeichnungsmaterial (4) und eine Lichtquelle (5), die kohärentes Licht (8, 11) emittiert, einen Modulator, insbesondere einen Spatial Light Modulator (10), der so angeordnet ist, dass das kohärente Licht (8) örtlich gemäß einem Individualisierungsmuster zum Kodieren von Individualisierungsinformationen modulierbar ist oder moduliert wird, sowie eine Abbildungsoptik zum Führen des kohärenten Lichts (8, 11), so dass das holografische Aufzeichnungsmaterial (4) mit dem kohärenten modulierten Licht (8,11) durchstrahlt wird und zumindest ein Teil des kohärenten modulierten Lichts (11) an dem Hologrammmaster (2) reflektiert oder gebeugt wird, um mit dem das holografische Aufzeichnungsmaterial (4) durchstrahlenden kohärenten Licht (8, 11) zu interferieren und so das Hologramm (45, 45', 121, 126) in das Aufzeichnungsmaterial (4) zu belichten,
wobei der Hologrammmaster (2), in einem Bereich, in dem das modulierte kohärente Licht von dem Hologrammmaster (2) reflektiert oder gebeugt wird, so ausgebildet ist, dass dem gebeugten oder reflektierten kohärenten Licht ein Hintergrundmuster (120) aufgeprägt wird, so dass das Hintergrundmuster (120) durch die Individualisierungsinformationen individualisiert bei einer Rekonstruktion des belichteten Hologramms (45, 45', 121, 126) mit den Individualisierungsinformationen wahrnehmbar oder erfassbar ist, **dadurch gekennzeichnet, dass** der Hologrammmaster (2) ein Masterhologramm ist, das mindestens zwei unterschiedliche Regionen (15, 16, 101-104), die jeweils eine einheitliche Erscheinung aufweisen, umfasst und die mindestens zwei unterschiedlichen Regionen (15, 16, 101-104) eine unterschiedliche Beugungseffizienz unter einem Belichtungseinfallwinkel aufweisen, unter dem Licht, welches zu beugen oder zu reflektieren ist, auf den Hologrammmaster (2) auftrifft, wobei die unterschiedlichen Beugungseffizienzen der unterschiedlichen Regionen (15, 16, 101-104) des Hintergrundmusters (120) alle oberhalb eines vorgegebenen Schwellenwertes liegen, wobei das Masterhologramm und die Individualisierungsinformationen so aufeinander abgestimmt sind, dass mindestens ein Teil einer Kontur einer der mindestens zwei Regionen (15, 16, 101-104) des Hintergrundmusters (120) durch die Individualisierungsinformationen verändert wird und nicht in dem Hologramm (45, 45', 121, 126) abgespeichert wird.

2. Vorrichtung (1) nach Anspruch 1, **dadurch gekennzeichnet, dass** der Hologrammmaster (2) mit einem in zwei Dimensionen unregelmäßigen Hintergrundmuster (120) ausgebildet ist und/oder dass der Hologrammmaster (2) so ausgebildet ist, dass ein Aufprägen des Hintergrundmusters (120) bewirkt, dass das belichtete Hologramm unter mindestens einer optimalen Rekonstruktionsgeometrie, die durch einen Rekonstruktionseinfallwinkel und einen Rekonstruktionsausfallwinkel festgelegt ist und unter der ein Maximum der in dem Hologramm (45, 45', 121, 126) gespeicherten Individualisierungsinformationen wahrnehmbar ist, so rekonstruiert, dass das Hintergrundmuster (120) Regionen (15, 16, 101-104) unterschiedlicher Beugungseffizienz umfasst.

3. Vorrichtung (1) nach einem der Ansprüche 1 oder 2, **dadurch gekennzeichnet, dass** der Hologrammmaster (2) mindestens zwei Regionen (15, 16, 101-104) unterschiedlicher Streucharakteristik umfasst, die jeweils unter einem gleichen Belichtungseinfallwinkel einfallendes monochromatisches kohärentes Licht abhängig von ihrer Streucharakteristik in unterschiedlich große begrenzte Winkelbereiche um denselben Belichtungsausfallwinkel reflektieren und/oder beugen.

4. Vorrichtung (1) nach einem der Ansprüche 1 bis 3, **dadurch gekennzeichnet, dass** der Hologrammmaster (2) eine beugende Prägestruktur umfasst.

5. Verfahren zum Herstellen eines individualisierten Hologramms (45, 45', 121, 126) mit einer Vorrichtung nach einem der Ansprüche 1 bis 4 umfassend die Schritte:
Bereitstellen des Hologrammmasters (2),
Anordnen des holografischen Aufzeichnungsmaterials (4) relativ zu dem Hologrammmaster (2);
Erzeugen des kohärenten Lichts (8)
räumliches Modulieren des kohärenten Lichts (8) gemäß dem Individualisierungsmuster zur Kodierung der Individualisierungsinformationen und
Führen des modulierten kohärenten Lichts (11), so dass das holografische Aufzeichnungsmaterial (4) mit dem kohärenten modulierten Licht (11) durchstrahlt wird und der zumindest eine Teil des kohärenten modulierten Lichts (11) an dem Hologrammmaster (2) reflektiert oder gebeugt wird, um mit dem das holografische Aufzeichnungsmaterial (4) durchstrahlenden kohärenten Licht (11) zu interferieren und so das Hologramm (45, 45', 121, 126) in das Aufzeichnungsmaterial (4) zu belichten, wobei mittels des Hologrammmasters (2) das in dem Hologrammmaster (2) gespeicherte Hintergrundmuster (120) dem die kodierten Individualisierungsinformationen umfassenden modulierten kohärenten Licht beim Reflektieren oder Beugen an dem Hologrammmaster (2) aufgeprägt wird, so dass das Hintergrundmuster (120) durch die Individualisierungsinformationen individualisiert bei der Rekonstruktion des belichteten Hologramms (45, 45', 121, 126) mit den Individualisierungsinformationen wahrnehmbar oder erfassbar ist, **dadurch gekennzeichnet, dass** das Hintergrundmuster (120) so ausgebildet ist oder wird, dass dieses Hintergrundmuster (120) die mindestens zwei Regionen (15,16,101-104) umfasst, und dem kohärenten modulierten Licht so aufgeprägt wird, dass das Hintergrundmuster durch die unterschiedlichen Regionen (15, 16, 101-104), die unterschiedliche Beugungseffizienzen unter einer vorgegebenen Rekonstruktionsgeometrie aufweisen, in dem Hologramm (45, 45', 121, 126) gespeichert wird, wenn das Individualisierungsmuster keine Modulation des kohärenten Lichtes bewirkt und wobei die unterschiedlichen Beugungseffizienzen der unterschiedlichen Regionen (15, 16, 101-104) des Hintergrundmusters (120) alle oberhalb des vorgegebenen Schwellenwertes liegen, wobei das Masterhologramm und die Individualisierungsinformationen so aufeinander abgestimmt werden, dass der mindestens eine Teil der Kontur der einen der mindestens zwei Regionen (15, 16, 101-104) des Hintergrundmusters (120) durch die Individualisierungsinformationen verändert wird und nicht in dem Hologramm (45, 45', 121, 126) abgespeichert wird.

6. Das durch die Vorrichtung nach einem der Ansprüche 1 bis 4 oder das Verfahren im Anspruch 5 hergestellte individualisierte Hologramm (45, 45', 121, 126) umfassend das holografische Aufzeichnungsmaterial (4), in dem die holografische Struktur gespeichert ist, die die Individualisierungsinformationen in Form des Individualisierungsmusters umfasst, wobei in der holografischen Struktur zusätzlich das Hintergrundmuster (120) gespeichert ist, dass das Hintergrundmuster (120) durch die Individualisierungsinformationen individualisiert bei einer Rekonstruktion des Hologramms (45, 45', 121, 126) mit den Individualisierungsinformationen wahrnehmbar oder erfassbar ist, **dadurch gekennzeichnet, dass** das Hintergrundmuster (120) die mindestens zwei Regionen (15, 16, 101-104) umfasst, die unterschiedliche Beugungseffizienzen unter einer vorgegebenen Rekonstruktionsgeometrie aufweisen, wobei die unterschiedlichen Beugungseffizienzen der unterschiedlichen Regionen (15, 16, 101-104) des Hintergrundmusters (120) alle oberhalb des vorgegebenen Schwellenwertes liegen, wobei der mindestens eine Teil der Kontur (106) der einen der mindestens zwei Regionen (15, 16, 101-104) des Hintergrundmusters (120) durch die Individualisierungsinformationen verändert und nicht in dem Hologramm (45, 45', 121, 126) abgespeichert ist, wobei insbesondere das Hintergrundmuster (120) in zwei Dimensionen unregelmäßig ist.

7. Hologramm (45, 45', 121, 126) nach Anspruch 6, **dadurch gekennzeichnet, dass** das Hologramm (45, 45', 121, 126) unter mindestens einer optimalen Rekonstruktionsgeometrie, die durch einen Rekonstruktionseinfallwinkel und einen Rekonstruktionsausfallwinkel festgelegt ist und unter der ein Maximum der in dem Hologramm (45, 45', 121, 126) gespeicherten Individualisierungsinformationen wahrnehmbar ist, so rekonstruiert, dass das Hintergrundmuster (120) Regionen (15, 16, 101-104) unterschiedlicher Beugungseffizienz umfasst ist.

8. Hologramm (45, 45', 121, 126) nach Anspruch 6 oder 7, **dadurch gekennzeichnet, dass** die unterschiedlichen Beugungseffizienzen der unterschiedlichen Regionen (15, 16, 101-104) des Hintergrundmusters (120) alle innerhalb eines vorgegebenen Intervalls liegen, das vorzugsweise eine Spanne von 30% umfasst.

9. Hologramm (45, 45', 121, 126) nach einem der Ansprüche 6 bis 8, **dadurch gekennzeichnet, dass** die mindestens zwei Regionen (15, 16, 101-104) unterschiedliche Streucharakteristik ausweisen, die jeweils unter einem gleichen Belichtungseinfallwinkel einfallendes monochromatisches kohärentes Licht abhängig von ihrer Streucharakteristik in unterschiedlich große begrenzte Winkelbereiche um denselben Belichtungsausfallwinkel reflektieren und/oder beugen.

10. Hologramm (45, 45', 121, 126) nach einem der Ansprüche 6 bis 9, **dadurch gekennzeichnet, dass** die Individualisierungsinformationen ein Passbild einer menschlichen Person umfassen.

11. Hologramm (45, 45', 121, 126) nach einem der Ansprüche 6 bis 10, **dadurch gekennzeichnet, dass** zusätzlich zu dem Hintergrundmuster (120) ein verstecktes Sicherheitsmerkmal codiert ist, insbesondere ein Projektionshologramm oder ein Mehrrichtungsstrahlerzeugungselement, wobei ein Mehrrichtungsstrahlerzeugungselement beim Belichten des Hologramms (45, 45', 121, 126) mit kohärentem Licht, beispielsweise Laserlicht, einer vorgegebenen Wellenlänge unter einem vorgegebenen Einstrahlungswinkel Licht in mindestens zwei voneinander getrennte Raumwinkelbereiche beugt.

## Claims

1. A device (1) for producing a hologram (45, 45', 121, 126) as a security feature of a security document, comprising a hologram master (2), a receptacle and/or guide for a holographic recording material (4), and a light source (5) that emits coherent light (8, 11), a modulator, particularly a spatial light modulator (10), that is arranged in such a way that the coherent light (8) can be or is modulated locally according to an individualization pattern for encoding individualization information, as well as imaging optics for guiding the coherent light (8, 11), so that the holographic recording material (4) is irradiated with the coherent modulated light (8, 11) and at least a portion of the coherent modulated light (11) is reflected on the hologram master (2) or is diffracted in order to interfere with the coherent light (8, 11) radiating through the holographic recording material (4) and thus expose the hologram (45, 45', 121, 126) in the recording material (4),
wherein the hologram master (2), in a region in which the modulated coherent light is reflected or diffracted by the hologram master (2), is embodied such that a background pattern (120) is imprinted on the diffracted or reflected coherent light, so that the background pattern (120) can be perceived or detected in an individualized manner by means of the individualization information during a reconstruction of the exposed hologram (45, 45', 121, 126) with the individualization information, **characterized in that** the hologram master (2) is a master hologram that comprises at least two different regions (15, 16, 101-104), each having a uniform appearance, and that the at least two different regions (15, 16, 101-104) have a different diffraction efficiency at an exposure angle of incidence at which light that is to be diffracted or reflected is incident on the hologram master (2), the different diffraction inefficiencies of the different regions (15, 16, 101-104) of the background pattern (120) all being above a predetermined threshold value, and the master hologram and the individualization information being coordinated with one another such that at least a portion of a contour of one of the at least two regions (15, 16, 101-104) of the background pattern (120) is altered by the individualization information and not stored in the hologram (45, 45', 121, 126).

2. The device (1) as set forth in claim 1, **characterized in that** the hologram master (2) is embodied with a background pattern (120) that is irregular in two dimensions and/or that the hologram master (2) is embodied such that an imprinting of the background pattern (120) has the effect that, in at least one optimal reconstruction geometry that is defined by a reconstruction angle of incidence and a reconstruction angle of reflection and in which a maximum of the individualization information stored in the hologram (45, 45', 121, 126) can be perceived, the exposed hologram is reconstructed such that the background pattern (120) comprises regions (15, 16, 101-104) of different diffraction efficiency.

3. The device (1) as set forth in one of claims 1 or 2, **characterized in that** the hologram master (2) comprises at least two regions (15, 16, 101-104) having different scattering characteristics, each of which reflects and/or diffracts incident monochromatic coherent light arriving at the same angle of incidence in differently sized, limited angular regions around the same exposure emittance angle as a function of its scattering characteristics.

4. The device (1) as set forth in one of claims 1 to 3, **characterized in that** the hologram master (2) comprises a diffracting imprint structure.

5. A method for producing an individualized hologram (45, 45', 121, 126) with a device as set forth in one of claims 1 to 4, comprising the steps:
providing the hologram master (2),
arranging the holographic recording material (4) relative to the master hologram (2);
generating the coherent light (8),
spatially modulating the coherent light (8) according to the individualization pattern for encoding the individualization information,
and
guiding the modulated coherent light (11) such that the holographic recording material (4) is irradiated with the coherent modulated light (11) and the at least one portion of the coherent modulated light (11) is reflected or diffracted on the hologram master (2) in order to interfere with the coherent light (11) shining through the holographic recording material (4) and thus expose the hologram (45, 45', 121, 126) in the recording material (4), wherein the background pattern (120) stored in the hologram master (2) is imprinted on the modulated coherent light comprising the encoded individualization information when it is reflected or diffracted on the hologram master (2), so that the background pattern (120) can be perceived or detected in an individualized manner by means of the individualization information during the reconstruction of the exposed hologram (45, 45', 121, 126) with the individualization information, **characterized in that** the background pattern (120) is or comes to be embodied such that this background pattern (120) comprises the at least two regions (15, 16, 101-104) and is imprinted on the coherent modulated light such that the background pattern is stored in the hologram (45, 45', 121, 126) by the different regions (15, 16, 101-104), which have different diffraction efficiencies in a given reconstruction geometry, if the individualization pattern does not cause any modulation of the coherent light and the different diffraction efficiencies in the different regions (15, 16, 101-104) of the background pattern (120) are all above the predetermined threshold value, the master hologram and the individualization information being coordinated with one another such that the at least one portion of the contour of one of the at least two regions (15, 16, 101-104) of the background pattern (120) is altered by the individualization information and not stored in the hologram (45, 45', 121, 126).

6. The individualized hologram (45, 45', 121, 126) produced by the device as set forth in one of claims 1 to 4 or the method in claim 5, comprising the holographic recording material (4) in which the holographic structure is stored which comprises the individualization information in the form of the individualization pattern, the background pattern (120) being additionally stored in the holographic structure, so that the background pattern (120) can be perceived or detected in an individualized manner by means of the individualization information during a reconstruction of the hologram (45, 45', 121, 126) with the individualization information, **characterized in that** the background pattern (120) comprises the at least two regions (15, 16, 101-104) having different diffraction efficiencies in a predetermined reconstruction geometry, the different diffraction efficiencies of the different regions (15, 16, 101-104) of the background pattern (120) all being above the predetermined threshold value, the at least one portion of the contour (106) of one of the at least two regions (15, 16, 101-104) of the background pattern (120) is altered by the individualization information and not stored in the hologram (45, 45', 121, 126), the background pattern (120) in particular being irregular in two dimensions.

7. The hologram (45, 45', 121, 126) as set forth in claim 6, **characterized in that**, in at least one optimal reconstruction geometry that is defined by a reconstruction angle of incidence and a reconstruction angle of reflection and in which a maximum of the individualization information stored in the hologram (45, 45', 121, 126) can be perceived, the hologram (45, 45', 121, 126) can be reconstructed such that the background pattern (120) comprises regions (15, 16, 101-104) of different diffraction efficiency.

8. The hologram (45, 45', 121, 126) as set forth in claim 6 or 7, **characterized in that** the different diffraction efficiencies of the different regions (15, 16, 101-104) of the background pattern (120) are all within a predetermined interval, which preferably spans a range of 30%.

9. The hologram (45, 45', 121, 126) as set forth in one of claims 6 to 8, **characterized in that** the at least two regions (15, 16, 101-104) have different scattering characteristics, each of which reflects and/or diffracts incident monochromatic coherent light arriving at the same angle of incidence in differently sized, limited angular regions around the same exposure emittance angle as a function of its scattering characteristics.

10. The hologram (45, 45', 121, 126) as set forth in one of claims 6 to 9, **characterized in that** the individualization information includes a passport photo of a human person.

11. The hologram (45, 45', 121, 126) as set forth in one of claims 6 to 10, **characterized in that**, in addition to the background pattern (120), a hidden security feature is encoded, particularly a projection hologram or a multi-directional beam-generating element, a multi-directional beam-generating element diffracting light in at least two mutually separated solid angle regions when the hologram is exposed (45, 45', 121, 126) with coherent light, for example laser light, of a predetermined wavelength at a predetermined angle of incidence.

## Revendications

1. Dispositif (1) de réalisation d'un hologramme (45, 45', 121, 126) sous la forme d'un élément de sécurité d'un document de sécurité, ledit dispositif comprenant un maître d'hologramme (2), un réceptacle et/ou un guide destiné à un support d'enregistrement holographique (4) et une source de lumière (5) qui émet une lumière cohérente (8, 11), un modulateur, en particulier un modulateur de lumière spatial (10), qui est disposé de telle sorte que la lumière cohérente (8) soit modulée ou puisse être modulée localement suivant un motif d'individualisation destiné à coder des informations d'individualisation, ainsi qu'une optique de reproduction destinée à guider la lumière cohérente (8, 11) de telle sorte que le support d'enregistrement holographique (4) soit traversé par la lumière cohérente modulée (8, 11) et qu'au moins une partie de la lumière cohérente modulée (11) soit réfléchie ou diffractée au niveau du maître d'hologramme (2) afin d'interférer avec la lumière cohérente (8, 11) traversant le matériau d'enregistrement holographique (4) et exposer ainsi l'hologramme (45, 45', 121, 126) dans le support d'enregistrement (4), le maître d'hologramme (2), situé dans une région dans laquelle la lumière cohérente modulée est réfléchie ou diffractée par le maître d'hologramme (2), étant conçu de telle sorte qu'un motif d'arrière-plan (120) soit imprimé à la lumière cohérente diffractée ou réfléchie de sorte que le motif d'arrière-plan (120) soit perceptible ou détectable, de manière individualisée par les informations d'individualisation, lors d'une reconstruction de l'hologramme exposé (45, 45', 121, 126) avec les informations d'individualisation, **caractérisé en ce que** le maître d'hologramme (2) est un hologramme-maître qui comprend au moins deux régions différentes (15, 16, 101-104) qui présentent chacune un aspect uniforme, et les au moins deux régions différentes (15, 16, 101-104) présentent différents pouvoirs de diffraction à un angle d'incidence d'exposition avec lequel la lumière à diffracter ou à réfléchir est incidente au maître d'hologramme (2), les différents pouvoirs de diffraction des différentes régions (15, 16, 101-104) du motif d'arrière-plan (120) étant tous supérieurs à une valeur de seuil spécifiées, l'hologramme-maître et les informations d'individualisation étant adaptés entre eux de telle sorte qu'au moins une partie d'un contour de l'une des au moins deux régions (15, 16, 101-104) du motif d'arrière-plan (120) soit modifiée par les informations d'individualisation et ne soit pas mémorisée dans l'hologramme (45, 45', 121, 126).

2. Dispositif (1) selon la revendication 1, **caractérisé en ce que** le maître d'hologramme (2) est conçu avec un motif d'arrière-plan (120) qui est irrégulier dans deux dimensions et/ou **en ce que** le maître d'hologramme (2) est conçu de façon à imprimer le motif d'arrière-plan (120) et reconstruire l'hologramme exposé avec au moins une géométrie de reconstruction optimale qui est définie par un angle d'incidence de reconstruction et un angle de réflexion de reconstruction et avec laquelle un maximum d'informations d'individualisation mémorisées dans l'hologramme (45, 45', 121, 126) puisse être perçu de sorte que le motif d'arrière-plan (120) comprenne des régions (15, 16, 101-104) de différents pouvoirs de diffraction.

3. Dispositif (1) selon l'une des revendications 1 ou 2, **caractérisé en ce que** le maître d'hologramme (2) comprend au moins deux régions (15, 16, 101-104) de caractéristiques de diffusion différentes qui réfléchissent et/ou diffractent chacune la lumière cohérente monochromatiques, incidente avec le même angle d'incidence d'éclairement, en fonction de leurs caractéristiques de diffusion dans des plages angulaires limitées d'étendues différentes autour du même angle de réflexion d'éclairement.

4. Dispositif (1) selon l'une des revendications 1 à 3, **caractérisé en ce que** le maître d'hologramme (2) comprend une structure d'impression diffractive.

5. Procédé de réalisation d'un hologramme individualisé (45, 45', 121, 126) au moyen d'un dispositif selon l'une des revendications 1 à 4, ledit procédé comprenant les étapes suivantes :
fournir le maître d'hologramme (2),
disposer le support d'enregistrement holographique (4) par rapport au maître d'hologramme (2),
générer la lumière cohérente (8),
moduler spatialement la lumière cohérente (8) suivant le motif d'individualisation destiné à coder les informations d'individualisation et
guider la lumière cohérente modulée (11) de sorte que le support d'enregistrement holographique (4) soit traversé par la lumière cohérente modulée (11) et que l'au moins une partie de la lumière cohérente modulée (11) soit réfléchie ou diffractée au niveau du maître d'hologramme (2) afin d'interférer avec la lumière cohérente (11) traversant le support d'enregistrement holographique (4) et ainsi exposer l'hologramme (45, 45', 121, 126) dans le support d'enregistrement (4), le motif d'arrière-plan (120), mémorisé dans le maître d'hologramme (2),
étant imprimé au moyen du maître d'hologramme (2) à la lumière cohérente modulée comprenant les informations d'individualisation codées lorsqu'elle est réfléchie ou diffractée au niveau du maître d'hologramme (2) de sorte que le motif d'arrière-plan (120) puisse être perçu ou détecté, de manière individualisée par les informations d'individualisation, lors de la reconstruction de l'hologramme exposé (45, 45', 121, 126) comprenant les informations d'individualisation, **caractérisé en ce que** le motif d'arrière-plan (120) est conçu, ou on le conçoit, de telle sorte que ce motif d'arrière-plan (120) comprenne les au moins deux régions (15, 16, 101-104) et soit imprimé à la lumière cohérente modulée de telle sorte que le motif d'arrière-plan soit mémorisé dans l'hologramme (45, 45', 121, 126), par le biais des différentes régions (15, 16, 101-104) qui présentent différents pouvoirs de diffraction avec une géométrie de reconstruction spécifiée, lorsque le motif d'individualisation ne provoque aucune modulation de la lumière cohérente et les différents pouvoirs de diffraction des différentes régions (15, 16, 101-104) du motif d'arrière-plan (120) étant tous supérieurs à la valeur de seuil spécifiée, l'hologramme-maître et les informations d'individualisation étant adaptés entre eux de telle sorte qu'au moins une partie du contour de l'une des au moins deux régions (15, 16, 101-104) du motif d'arrière-plan (120) soit modifiée par les informations d'individualisation et ne soit pas mémorisée dans l'hologramme (45, 45', 121, 126).

6. Hologramme individualisé (45, 45', 121, 126), réalisé par le dispositif selon l'une des revendications 1 à 4 ou le procédé selon la revendication 5, ledit hologramme individualisé comprenant le support d'enregistrement holographique (4) dans lequel est mémorisée la structure holographique qui comprend les informations d'individualisation sous la forme du modèle d'individualisation, le motif d'arrière-plan (120) étant en outre mémorisé dans la structure holographique de sorte que le motif d'arrière-plan (120) puisse être perçu ou détecté, de manière individualisée par les informations d'individualisation, lors d'une reconstruction de l'hologramme (45, 45', 121, 126) comprenant les informations d'individualisation, **caractérisé en ce que** le motif d'arrière-plan (120) comprend les au moins deux régions (15, 16, 101-104) qui présentent des pouvoirs de diffraction différents avec une géométrie de reconstruction spécifiée, les différents pouvoirs de diffraction des différentes régions (15, 16, 101-104) du motif d'arrière-plan (120) étant tous supérieurs à la valeur de seuil spécifiée, l'au moins une partie du contour (106) de l'une des au moins deux régions (15, 16, 101-104) du motif d'arrière-plan (120) soit modifiée par les informations d'individualisation et ne soit pas mémorisée dans l'hologramme (45, 45', 121, 126), en particulier le motif d'arrière-plan (120) étant irrégulier dans deux dimensions.

7. Hologramme (45, 45', 121, 126) selon la revendication 6, **caractérisé en ce que** l'hologramme (45, 45', 121, 126) est reconstruit avec au moins une géométrie de reconstruction optimale qui est définie par un angle d'incidence de reconstruction et un angle de réflexion de reconstruction et avec laquelle un maximum d'informations d'individualisation mémorisées dans l'hologramme (45, 45', 121, 126) peut être perçu, de telle sorte que le motif d'arrière-plan (120) comprend des régions (15, 16, 101-104) de différents pouvoirs de diffraction.

8. Hologramme (45, 45', 121, 126) selon la revendication 6 ou 7, **caractérisé en ce que** les différents pouvoirs de diffraction des différentes régions (15, 16, 101-104) du motif d'arrière-plan (120) sont tous compris dans un intervalle spécifié qui présente de préférence une étendue de 30%.

9. Hologramme (45, 45', 121, 126) selon l'une des revendications 6 à 8, **caractérisé en ce que** les au moins deux régions (15, 16, 101-104) présentent des caractéristiques de diffusion différentes qui réfléchissent et/ou diffractent chacune la lumière cohérente monochromatique, incidente avec le même angle d'incidence d'éclairement, en fonction de leurs caractéristiques de diffusion dans des plages angulaires limitées de dimensions différentes autour du même angle de réflexion d'éclairement.

10. Hologramme (45, 45', 121, 126) selon l'une des revendications 6 à 9, **caractérisé en ce que** les informations d'individualisation comprennent une photo d'identité d'une personne humaine.

11. Hologramme (45, 45', 121, 126) selon l'une des revendications 6 à 10, **caractérisé en ce qu'**un élément de sécurité caché, notamment un hologramme de projection ou un élément de génération de faisceau multidirectionnel, est codé en plus du motif d'arrière-plan (120), un élément de génération de faisceau multidirectionnel diffractant la lumière dans au moins deux zones d'angle solide séparées l'une de l'autre avec un angle d'incidence spécifié lorsque l'hologramme (45, 45', 121, 126) est exposé à une lumière cohérente, par exemple une lumière laser, d'une longueur d'onde spécifiée.
